# EUROPEAN PATENT SPECIFICATION

(11) **EP 3 742 695 B1**
(45) Date of publication and mention of the grant of the patent: **03.07.2024**
(21) Application number: 19382402.6
(22) Date of filing: 20.05.2019
(51) Int. Cl.: H04L 65/1069

(54) **NETWORK SERVICE SYSTEM AND METHOD**
NETZWERKDIENSTSYSTEM UND -VERFAHREN
SYSTÈME ET PROCÉDÉ DE SERVICE DE RÉSEAU

(43) Date of publication of application: 25.11.2020
(73) Proprietor: Vodafone IP Licensing Limited, Newbury, Berkshire RG14 2FN (GB); Vodafone Group Services Limited, Newbury, Berkshire RG14 2FN (GB)
(72) Inventor: Iñiguez Sánchez, Rubén, 28108 Madrid (ES); Domínguez, Rafael, 28108 Madrid (ES); Tejedor Gutiérrez, Jose Luis, 28108 Madrid (ES)
(74) Representative: Boult Wade Tennant LLP

(56) References cited:
- US-A1- 2004 176 128
- US-A1- 2008 064 398

## Description

### FIELD OF THE INVENTION

The present disclosure relates to methods and apparatus for use in a telecommunications network. In particular, the present disclosure relates to initiating a communication session between terminals. The disclosure relates to systems, methods and apparatus for initiating a communication session.

### BACKGROUND

A telecommunications network may support the establishment of a communication session between terminals operated by users of the terminals. For example, a communication session such as a voice call, a video call and/or a messaging session may be established between terminals. The initiation of such a communication session may be facilitated by a network service system in the telecommunications network, which supports and facilitates communications between the terminals, thereby providing one or more communication session related services to the parties. One such example of a network service system is an Internet Protocol Multimedia Subsystem (IMS), which may be implemented in a telecommunications network to support services such as Voice over Long Term Evolution (VoLTE).

The initiation of a communication session typically involves an originating (calling) party requesting the establishment of a communication session with a terminating (called) party. For example, initiation of a communication session may include the generation of a session setup message at an originating terminal, which is then routed through one or more networks (e.g. through one or more network service systems facilitating the communication session) and delivered to a terminating terminal. The terminals may subsequently exchange one or more messages in order to establish the communication session, thereby allowing the users to communicate with each other over the established session. For example, successful establishment of a communication session between terminals may cause the terminating user to be alerted to an incoming call. Upon acceptance of the incoming call at the terminating terminal, the users may communicate by voice and/or video over the established call.

In some contexts, it may be desirable to reduce the amount of time taken to establish a communication session between terminals. For example, a calling user may desire to be successfully connected to a called user as quickly as possible, in order to begin communicating with the called user with little or no perceptible delay. The time taken to successful establish a communication session between terminals may be referred to as a session setup time. In the context of a voice or video call, a time period between a calling party initiating a call request and a called party being alerted to the incoming call request is typically referred to as a call setup time. In general, it may be desirable to reduce a communication session setup time, and in particular a call setup time. A communication session setup time may, for example, be taken as a measure of (or at least contribute to a measure of) network performance. For example, communication session setup time may contribute to one or more benchmarks of a network's performance.

US 2004/176128 A1 relates to a system, mobile communications unit, and softswitch method and apparatus for establishing an Internet Protocol communication link.

US 2008/064398 A1 relates to a method for triggering user registration in an IP multimedia subsystem.

It is in this context that the subject matter contained in the present application has been devised.

### SUMMARY OF THE INVENTION

Aspects of the invention include a network service system according to independent claim 1, a network service module according to independent claim 15, a method according to independent claim 21 and a computer program comprising instructions according to independent claim 23. Further embodiments are set out in the dependent claims.

According to a first aspect of the present disclosure there is provided a network service system for a telecommunications network and for initiating a communication session between a first terminal for a first user and a second terminal for a second user, the network service system comprising a plurality of network modules associated with the first user, wherein the network service system is configured to: receive a session setup message originating from the first terminal and addressed to the second terminal, wherein the session setup message comprises a request to initiate the communication session between the first terminal and the second terminal; and route the received session setup message through an originating leg in the network service system and send the session setup message to a terminating leg; wherein, the originating leg of the session setup message includes a network service module configured to generate, in response to receiving the session setup message in the originating leg, a connection request message addressed to the second terminal and for initiating connection of the second terminal to a telecommunications network serving the second terminal; and wherein the network service system is further configured to send the connection request message to the terminating leg before sending the session setup message to the terminating leg.

The connection request message is sent to the terminating leg before the session setup message is sent to the terminating leg. This may allow the connection request message to arrive at the telecommunications network serving the second terminal before the session setup message arrives at the telecommunications network. The telecommunications network serving the second terminal therefore receives a communication addressed to the second terminal (in the form of the connection request message) earlier in the communication session initiation process than would be the case if the connection request message was not generated and sent to the terminating leg. The connection request message therefore serves as advance notification of an incoming request to initiate communication with the second terminal.

Providing the telecommunications network serving the second terminal with a communication directed to the second terminal (the connection request message) earlier in a communication session initiation process may be particularly desirable in a scenario in which there is no active connection in place between the telecommunications network and the second terminal. For example, in some scenarios, the second terminal may be in an idle mode in which no active connection (e.g. a radio and/or data bearer over which communications can be relayed) with the second terminal may be in place. In such a scenario, a process of establishing an active connection between the second terminal and the telecommunications network may need to be performed before the session setup message can be delivered to the second terminal, and establishment of the communication session between the first and second terminals can proceed. It will be understood that a process of establishing an active connection between the second terminal and the telecommunications network may introduce a delay in to the process of initiating a communication session between the first and second terminals.

By generating and sending the connection request message to the terminating leg in advance of sending the session setup message to the terminating leg, the telecommunications network serving the second terminal can begin establishing an active connection with the second terminal earlier. For example, upon receiving the connection request message, the telecommunications network may begin establishing an active connection with the second terminal before the session setup message arrives at the telecommunications network. When the session setup message arrives at the telecommunications network, the process of establishing an active connection with the second terminal may therefore already have begun and may in some cases have been completed. Any delay in forwarding the session setup message to the second terminal (caused by a time taken to establish an active connection with the second terminal) may therefore be reduced. Accordingly, a communication session setup time is advantageously reduced by generating and sending the connection request message.

It will be understood that a reduction in communication session setup time may be improved by generating and sending the connection request message earlier in a communication session setup process. By generating the connection request message in the originating leg, the connection request message is advantageously generated relatively early in the session setup process. For example, by generating the connection request message in the originating leg and sending the connection request message to the terminating leg before the session setup message reaches the terminating leg, the connection request message may reach the telecommunications network serving the second terminal earlier (than for example if the connection request message was not generated until the session setup message reaches the terminating leg). The reduction in communication session setup time may therefore be improved. Furthermore, providing the telecommunications network serving the second terminal with a connection request earlier in the session setup process, may provide the telecommunications network with greater flexibility related to establishing an active connection with the second terminal.

In some examples envisaged herein, the network service module may be configured to always generate a connection request message in response to receiving a session setup message. However, in other examples, the network service module may be further configured to determine whether to generate a connection request message in response to receiving the session setup message. That is, in some scenarios, the network service module may determine not to generate a connection request message. As will be described further herein, the determination may be based on one or more criteria. Whilst the network service module might, in some scenarios, determine not to generate a connection request message, the network service module is still configured to generate a connection request message in response to receiving a session setup message in the originating leg, since the network service module is configured to generate a connection request message for at least some session setup messages received in the originating leg. Furthermore, as was explained above, in at least some examples, the network service module may generate a connection request message every time a session setup message is receiving in the originating leg.

Sending the connection request message to the terminating leg may comprise: identifying a terminating network module associated with the second terminal and in the terminating leg; and sending the connection request message to the identified terminating network module. The identified terminating network module may be configured to forward the connection request message towards the telecommunications network serving the second terminal before the session setup message reaches the terminating network module.

Identifying the termination network module associated with the second terminal in the terminating leg may, in some examples, comprise consulting registration information related to the second terminal. For example, the second terminal may be registered with the network service system and registration information related to the second terminal may be accessed. The registration information may be used to identify a terminating network module in the terminating leg to which to send the connection request message. Such a process may improve the efficiency with which the connection request message is routed towards the second terminal.

Identifying the terminating network module in the terminating leg may comprise identifying a network module configured to perform session border control functionality for the second terminal in the terminating leg.

The network module configured to perform session border control functionality for the second terminal in the terminating leg may be identified, for example, as a contact address of the second terminal through the network module configured to perform session border control.

Sending the connection request message to a network module configured to perform session border control functionality for the second terminal may improve the efficiency with which the connection request message is routed towards the second terminal. This may advantageously reduce a time taken to route the connection request message to a telecommunications network serving the second terminal. The network module configured to perform session border control for the second terminal may, for example, be identified from registration information related to the second terminal. For example, information related to a registration of the second terminal with the network service system may be used to identify the network module configured to perform session border control functionality for the second terminal.

The network service system may be configured to register terminals with the network service system and store registration information of the terminals. The registration information of the terminals may include an indication of a network module configured to perform session border control functionality for each terminal. Identifying the terminating network module configured to perform session border control functionality for the second terminal may comprise looking up the second terminal's registration with the network service system.

The registration of terminals with the network service system may, for example, comprise a third party registration process. For example, a third party registration process as used in an IP Multimedia Subsystem (IMS) may be used to register one or more terminals. The network service module may, for example, receive registration information related to the second terminal. For example, the network service module may receive a registration message (e.g. a SIP REGISTER message) including registration information related to the second terminal.

Identifying the terminating network module in the terminating leg may comprise identifying a terminating network module configured to act as an initial point of contact for incoming signalling addressed to the second terminal.

The network service system may comprise an IP Multimedia Subsystem "IMS" network.

The network service module may comprise an application server in the IMS network.

The session setup message may comprise a SIP INVITE message.

The connection request message may comprise a SIP OPTIONS message.

According to a second aspect of the present disclosure there is provided a network system for initiating a communication session between a first terminal for a first user and a second terminal for a second user in a telecommunications network. The network system comprises: a network service system comprising a network service system according to the first aspect; and a telecommunications network serving the second terminal and configured to: receive the connection request message in the terminating leg; and in response to receiving the connection request message and if there is no active connection in place between the telecommunications network and the second terminal, transmit a connection signal for triggering the second terminal to connect to the telecommunications network.

The telecommunications network may be further configured to establish an active connection with the second terminal.

The telecommunications network may be further configured to receive the session setup message in the terminating leg and send the session setup message to the second terminal over the established active connection with the second terminal.

The telecommunications network may be configured to transmit the connection signal before receiving the session setup message.

Transmitting the connection signal may comprise transmitting a paging message to the second terminal.

According to a third aspect of the present disclosure there is provided a network service module for implementation in a network service system for a telecommunications network, the network service system being for initiating a communication session between a first terminal for a first user and a second terminal for a second user, wherein the network service module is associated with the first user and is configured to: receive a session setup message originating from the first terminal and addressed to the second terminal, wherein the session setup message comprises a request to initiate the communication session between the first terminal and the second terminal and wherein the session setup message is received as part of an originating leg of a routing of the session setup message in the network service system; generate, in response to receiving the session setup message in the originating leg, a connection request message addressed to the second terminal and for initiating connection of the second terminal to a telecommunications network serving the second terminal; and send the connection request message towards the second terminal, wherein the network service module is configured to send the connection request message towards the second terminal before the session setup message reaches a terminating leg.

The network service module may be further configured to forward the session setup message to another network module of the network service system in the originating leg.

Sending the connection request message from the network service module towards the second terminal may comprise: identifying a terminating network module associated with the second terminal and in a terminating leg; and sending the connection request message to the identified terminating network module.

Identifying the terminating network module in the terminating leg of the session setup message may comprise identifying a network module configured to perform session border control functionality in the terminating leg serving the second terminal.

The network service module may be configured to register terminals with the network service system and store registration information of the terminals, wherein the registration information of the terminals includes an indication of a network module configured to perform session border control functionality for each terminal. Identifying the terminating network module configured to perform session border control functionality for the second terminal may comprise looking up the second terminal's registration with the network service module.

Identifying the terminating network module in the terminating leg of the session setup message may comprise identifying a terminating network module configured to act as an initial point of contact for incoming signalling addressed to the second terminal.

Also disclosed herein is a method for initiating a communication session between a first terminal for a first user and a second terminal for a second user, the method comprising: receiving, at a network service system associated with the first user, a session setup message originating from the first terminal and addressed to the second terminal, wherein the session setup message comprises a request to initiate the communication session between the first terminal and the second terminal; routing the received session setup message through an originating leg in the network service system and sending the session setup message to a terminating leg; generating, at a network service module in the originating leg and in response to receiving the session setup message in the originating leg, a connection request message addressed to the second terminal and for initiating connection of the second terminal to a telecommunications network serving the second terminal; and sending the connection request message to the terminating leg before sending the session setup message to the terminating leg.

Sending the connection request message to the terminating leg may comprise: identifying a terminating network module associated with the second terminal and in the terminating leg; and sending the connection request message to the identified terminating network module. The identified terminating network module may be configured to forward the connection request message towards the telecommunications network serving the second terminal before the session setup message reaches the terminating network module.

Identifying the terminating network module in the terminating leg may comprise identifying a network module configured to perform session border control functionality for the second terminal in the terminating leg.

Terminals in the telecommunications network may be registered with the network service system and registration information of the terminals may be stored. The registration information of the terminals may include an indication of a network module configured to perform session border control functionality for each terminal. Identifying the terminating network module configured to perform session border control functionality for the second terminal may comprise looking up the second terminal's registration with the network service system.

Identifying the terminating network module in the terminating leg may comprise identifying a terminating network module configured to act as an initial point of contact for incoming signalling addressed to the second terminal.

The network service system may comprise an IP Multimedia Subsystem "IMS" network.

The network service module may comprise an application server in the IMS network.

The session setup message may comprise a SIP INVITE message.

The connection request message may comprise a SIP OPTIONS message.

The method may further comprise: receiving the connection request message at the telecommunications network serving the second terminal and if there is no active connection in place between the telecommunications network and the second terminal, transmitting a connection signal for triggering the second terminal to connect to the telecommunications network.

The method may further comprise establishing an active connection between the telecommunications network and the second terminal.

The method may further comprise receiving the session setup message in the terminating leg and sending the session setup message to the second terminal over the established active connection with the second terminal.

The connection signal may be transmitted from the telecommunications network before the session setup message is received at the telecommunications network.

Transmitting the connection signal may comprise transmitting a paging message to the second terminal from the telecommunications network.

According to a fourth aspect of the present disclosure there is provided a method for initiating a communication session between a first terminal for a first user and a second terminal for a second user, the method comprising: receiving, at a network service module in a network service system, a session setup message originating from the first terminal and addressed to the second terminal, wherein the session setup message comprises a request to initiate the communication session between the first terminal and the second terminal and wherein the session setup message is received as part of an originating leg of a routing of the session setup message in the network service system; generating, in response to receiving the session setup message in the originating leg, a connection request message for initiating connection of the second terminal to a telecommunications network serving the second terminal; and sending the connection request message towards the second terminal, wherein the network service module is configured to send the connection request message towards the second terminal before the session setup message reaches a terminating leg.

The method may further comprise forwarding the session setup message to another network module of the network service system in the originating leg.

Sending the connection request message towards the second terminal may comprise identifying a terminating network module associated with the second terminal and in a terminating leg; and sending the connection request message to the identified terminating network module.

Identifying the terminating network module in the terminating leg of the session setup message may comprise identifying a network module configured to perform session border control functionality in the terminating leg serving the second terminal.

Terminals in the telecommunications network may be registered with the network service system and registration information of the terminals may be stored. The registration information of the terminals may include an indication of a network module configured to perform session border control functionality for each terminal. Identifying the terminating network module configured to perform session border control functionality for the second terminal may comprise looking up the second terminal's registration with the network service system.

Identifying the terminating network module in the terminating leg of the session setup message may comprise identifying a terminating network module configured to act as an initial point of contact for incoming signalling addressed to the second terminal.

According to a fifth aspect of the present disclosure there is provided a computer program comprising instructions which, when carried out, cause a method according to the fourth or aspect to be implemented.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all examples and/or features of any example can be combined in any way and/or combination, unless such features are incompatible and as long as they fall withing the scope of the claims.

### BRIEF DESCRIPTION OF FIGURES

One or more embodiments of the invention are shown schematically, by way of example only, in the accompanying drawings, in which:
- Figure 1 is a schematic illustrations of a network system including a telecommunications network and a network service system;
- Figure 2 is a schematic illustrations of elements of a network system associated with the establishment of a two-way communication session between two users;
- Figure 3 is a schematic illustration of signalling associated with the initiation of a communication session between two users;
- Figure 4 is a schematic illustration of a network system including a network service system in accordance with the present disclosure;
- Figure 5 is a schematic illustration of signalling associated with the initiation of a communication session in accordance with an example of the present disclosure;
- Figure 6 is a schematic illustration of signalling associated with the initiation of a communication session in accordance with a further example of the present disclosure;
- Figure 7 is an illustration of an example method of initiating a communication session in accordance with the present disclosure;
- Figure 8 is an illustration of an example method of initiating a communication session at a telecommunications network in accordance with the present disclosure;
- Figure 9 is an illustration of an example method of initiating a communication session at a network service module in accordance with the present disclosure; and
- Figure 10 is an illustration of an example of an electronic device which may used to implement methods in accordance with the present disclosure.

### DETAILED DESCRIPTION

Before particular examples of the present disclosure are described, it is to be understood that the present disclosure is not limited to the particular network systems, modules and devices or methods described herein. It is also to be understood that the terminology used herein is used for describing particular examples only and is not intended to limit the scope of the claims.

Whilst the present disclosure is generally presented in the context of an IP Multimedia Subsystem (IMS) network and of a call establishment procedure using an IMS network (e.g. establishing of a Voice over LTE (VoLTE) call), it will be understood that the teachings of the present disclosure apply equally to other examples. For example, the teachings can apply to any situation where two or more parties are attempting to setup a communication session using a network service system.

The present disclosure is further generally presented in the context of one or more terminals being provided access to an IMS network via a telecommunications network in the form of a mobile telecommunications network such as a Long Term Evolution (LTE) or New Radio (NR) telecommunications network. However, the teachings of the present disclosure may apply equally to other examples of a telecommunications network. For example, the teachings presented herein may apply to connection via any form of telecommunications network in which a terminal may undergo a connection establishment procedure with the telecommunications network before a given session setup communication can be delivered to the terminal.

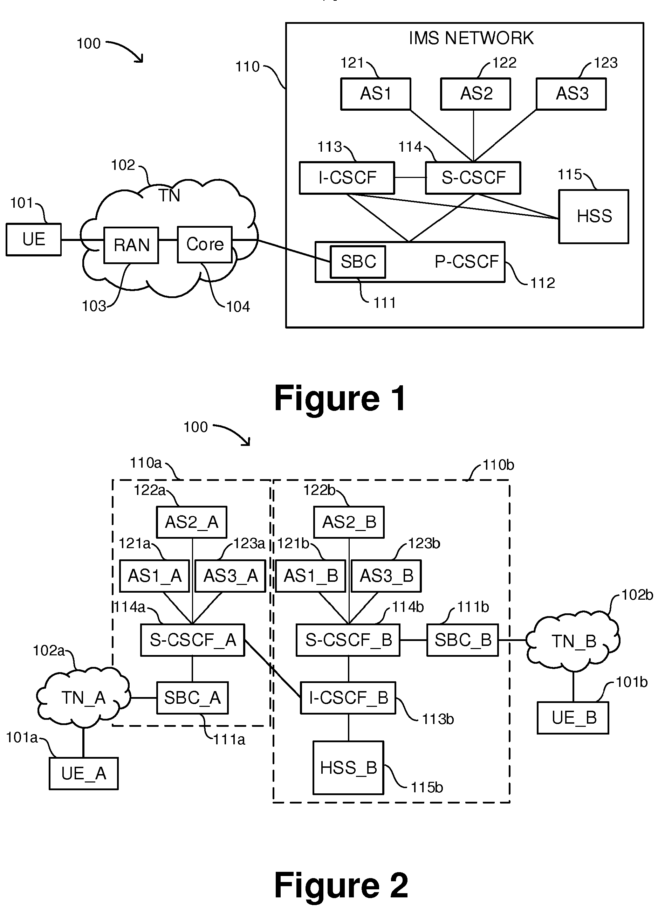

Figure 1 is a schematic illustration of an example of a network system 100. The network system 100 supports communication sessions between terminals (which may be referred to as User Equipment (UE)) 101 which connect to the network system 100 (or another network system). Throughout this specification the terms UE and terminal may be used interchangeably and are intended to refer to any electronic device suitable for connection to a telecommunications network, such as a device used directly by a user. Examples of suitable UEs or terminals include (but are not limited to) a cellular telephone, a smartphone, a Personal Computer (PC) such as a laptop computer, a tablet device and/or a vehicle infotainment system.

The network system 100 depicted in Figure 1 comprises a telecommunications network 103 and an IP Multimedia Subsystem (IMS) network 110. An IMS network 110 is presented herein as an example of a network service system, which provides at least one service to one or more users in the network system 100 (via a UE or terminal 101 connected to the network 100). However, the examples, embodiments and teachings presented herein may also be applicable to other forms of network service system. In general, the teachings presented herein with reference to an IMS network may equally apply to any other network service system which facilitates or otherwise handles a communication session between two or more users in a network system.

The telecommunications network 102 provides access for a terminal or UE 101 to the IMS network 110. That is, the telecommunications network 102 is in communication with the IMS network and provides access to the IMS network 110 through the telecommunications network 102. The telecommunications network 102 may comprise a mobile telecommunications network such as a 3G, LTE and/or New Radio (NR) mobile telecommunications network including a suitable core network.

In the example shown in Figure 1, the telecommunications network 102 is a mobile telecommunications network comprising a Radio Access Network (RAN) 103 and a core network 104. The RAN 103 provides connectivity to the core network 104 over an air interface, over which radio frequency signals are transmitted between the UE 101 and the RAN 103. The RAN 103 may be any suitable RAN, such as, in the example of an LTE mobile telecommunications network, an Evolved Universal Terrestrial Radio Access Network (E-UTRAN).

The RAN 103 provides access to the core network 104, which may comprise any suitable network infrastructure for providing access to one or more network services. In the case of a mobile telecommunications network (such as an LTE or NR network), the core network 104 includes a mobile data network such as an Evolved Packet Core (EPC).

As was explained above, the telecommunications network 102 provides a terminal or UE 101 with access to the IMS network 110. That is, the terminal 101 connects to the IMS network 110 through the telecommunications network 102. The telecommunications network 102 may be provided by and/or managed by the same or a different operator to an operator of the IMS network 110. The telecommunications network 102 may also provide access to one or more other networks or network systems. For example, the telecommunications network 102 may provide access to a public network such as the internet.

Whilst examples are described herein in which the telecommunications network 102 is a mobile telecommunications network, the telecommunications network 102 may comprise any suitable IP connectivity access network (IP-CAN) such as a Local Area Network (LAN) (e.g. a wireless LAN).

As will be well understood by a skilled person, an IMS network 110 is a network system for providing IP based multimedia services to users in a network 100. The most well-known use of an IMS network 110 is for handling packet-switched voice calls such as the Voice Over Long Term Evolution (VoLTE) service. However, an IMS network 110 may additionally or alternatively be used for providing other IP based multimedia services such as (but not limited to) video calls, instant messaging and/or file transfer. The operation and architecture of an IMS network (which is, for example, set out in the relevant 3^{rd} Generation Partnership Project 3GPP standards documentation) will be well understood by a person of ordinary skill in the art and as such, unless it is directly applicable to the present invention, no detailed description of an IMS network 110 or its standardised operation will be provided herein.

The IMS network 110 is depicted as comprising a plurality of IMS network modules. 111-115, 121 and 122. The network modules represent functional modules of the IMS network 110 and are not intended to be indicative of the physical architecture of the IMS network. For example, the function of one of the network modules may be implemented on the same device or on a different device to another of the network modules. In some examples, one or more of the network modules may be implemented on a plurality of interconnected devices.

The IMS network 110 comprises a Proxy-Call Session Control Function (P-CSCF) 112, an Interrogating-Call Session Control Function (I-CSCF) 113, a Serving-Call Session Control Function (S-CSCF) 114 and a Home Subscriber Server (HSS) 115. As will be described in further detail below, the IMS network 110 depicted in Figure 1 further comprises a first Application Server (AS1) 121, a second Application Server (AS2) 122 and a third Application Server (AS2) 123.

In brief, the P-CSCF 112 is a terminal's first point of contact with the IMS network 110 and serves to secure and regulate signalling which enters the IMS network 110 as well as controlling the quality of service of communications between the IMS network 110 and the terminal. The P-CSCF 112 includes the functions of a Session Border Control (SBC) 111 and can sometimes be referred to as an SBC. Since, the P-CSCF 112 provides functions that are similar to that of an SBC 111, the P-CSCF 112 may be seen as an example of an SBC 111 which is specialised for IMS functionalities. From another perspective, the P-CSCF 112 may be seen as a P-CSCF 112 having SBC functionality.

As will be understood by a skilled person, an SBC is an entity that carries out signalling control and helps secure and regulate the signalling that will enter the network, e.g. the IMS network 110 in the example of Figure 1. These functions are part of the functions that are fulfilled by the P-CSCF 112. The P-CSCF 112 is effectively an SBC (that will therefore be the first point of entry into the IMS network 110) that acts as a Session Initiation Protocol (SIP) proxy for the terminal and that will also provide encryption for the communications between the terminal 101 and the IMS network 110.

Throughout this specification, the terms P-CSCF and SBC may be used interchangeably in the context of an IMS network. Accordingly, any teachings presented herein with reference to a P-CSCF may be equally applicable to an SBC and vice-versa.

The I-CSCF 113 generally acts as a point of contact for an incoming signalling message. For example, an incoming signalling message arriving from another IMS network and/orfrom another part of the same IMS network 110 may first be directed to the I-CSCF, which then routes the signalling message to another network module in the IMS network 110. The I-CSCF may, for example, ask the HSS 115 to find a S-CSCF 114 which is associated with a terminal 101, to which an incoming signalling message is associated, and may direct the signalling message to the appropriate S-CSCF 114.

The S-CSCF 114 acts as a signalling anchor in the IMS network 110, controls signalling for a terminal 101 and provides access to services in the IMS network 110. For example, the S-CSCF 114 handles signalling to and from the application servers 121, 122. In general, a given terminal 101 which is connected to the IMS network 110, is associated with a given S-CSCF 114, which is situated in a user's home network.

The HSS 115 acts as a central database which stores data associated with users of the IMS network 110. For example, the HSS 155 may store (or at least provide access to) subscription data associated with user's subscriptions to the IMS network. As was explained above, the HSS 115 may store the S-CSCF 114 which is associated with each user and may be queried by the I-CSCF 113 to provide the S-CSCF 114 associated with a terminal, to which an incoming signalling message is to be directed.

The application servers 121, 122, 123 provide one or more services for a subscriber to the IMS network 110. For example, an application server 121, 122, 123 may provide a user with services such as multimedia telephony, voicemail and/or SMS. As will be described in further detail below, if a user is registered for a given service which is provided by an application server 121, 122, 123, the S-CSCF 114 associated with the user will direct at least some of the signalling for the user (e.g. signalling originating from or addressed to the user) to an appropriate application server 121, 122, 123. Whilst the IMS network 110 of Figure 1 is depicted as including three application servers 121, 122, 123 an IMS network 110 may, in general, include any number of application servers 121, 122, 123.

The IMS network 110 which is described above with reference to Figure 1 is presented purely as an example of the architecture and functionality of a typical IMS network 110. The IMS network 110 is shown and described from the perspective of a single user associated with the terminal 101. As will be well understood by a skilled person, a communication session established between different users may include signalling between different network modules associated with the different users. For example, different users may access an IMS network through the same or different telecommunications networks 102, may be associated with the same or different S-CSCFs 114, may be registered on the same or different HSSs 115 and/or may have subscriptions associated with the same or different application servers 121, 122, 123. In some examples, the different users may be subscribed with different IMS networks operated by different network operators. In such examples, the user may be associated with different I-CSCFs 113 and/or P-CSCFs/SBCs 112/111 situated in different IMS networks.

Whilst different users may be associated with different IMS networks, the different IMS networks may cooperate with each other to establish a communication session between the users. Throughout this description, IMS network modules associated with a first (originating) user and IMS network modules associated with a second (terminating) user are described and depicted. It will be understood that in practice one or more of the IMS network modules associated with the first user may be the same as one or more of the IMS network modules associates with the second user (e.g. where the users are registered with the same IMS network). Alternatively, the IMS network modules associated with the first user may be different to the IMS network modules associated with the second user and may, for example, be situated in a different IMS network (e.g. where the users are registered with different IMS networks).

By way of illustration, Figure 2 is a schematic illustration of the network nodes and modules associated with the establishment of a two-way communication session between two users using IMS. In the example, depicted in Figure 2, it is assumed that a first user A of a first terminal UE_A 101a initiates a communication session with a second user B of a second terminal UE_B 101b. The communication session may, for example, be a VoLTE call, however the same teachings may apply to different types of communication session established over IMS.

The communication session is initiated through the first terminal's 101a connection to an IMS network 110a through a telecommunications network 102a. The first terminal 101a initiates the communication session with the second terminal 101b, which connects to an IMS network 110b through a telecommunications network 102b. As was alluded to above, the telecommunications network 102a serving the first terminal 101a may be the same or may be different to the telecommunications network 102b serving the second terminal 101b. Similarly, the IMS network 110a with which the first terminal 101a is registered may be the same or may be different to the IMS network 110b with which the second terminal 101b is registered.

Since the first user initiates the communication session using the first terminal 101a, the first user and/or first terminal may be referred to as the originating (or calling) user and terminal respectively. The second user receives the communication session initiation at the second terminal 101b and may be referred to as the terminating (or called) terminal and user respectively.

The IMS network 110a includes an SBC 111a (or equivalently a P-CSCF) and an S-CSCF 114a associated with the first user, and application servers AS1 121a, AS2 122a and AS3 123a, providing services to which the first user is subscribed. The IMS network 110b includes an I-CSCF 113b, an S-CSCF 114b, and an SBC 111b associated with the second user and application servers AS1 121b, AS2 122b and AS2 123b providing services to which the second user is subscribed. The IMS network 110b further includes an HSS 115b on which subscription information of the second user may be stored.

Those network modules which are associated with the first user are denoted with the suffix "_A" in Figure 2 and those network modules which are associated with the second user are denoted with the suffix "_B" in Figure 2. References herein to a network module which is "associated" with a given user or terminal are intended to refer to a network module which provides some form of service or signalling for the given user or terminal. For example, the S-CSCF 114a which is associated with the first user is an S-CSCF 114a on which the first user is registered and which acts as a signalling anchor for the first user in the IMS network 110a with which the first user is registered. As will be understood by the skilled person, the S-CSCF 114a associated with the first user is typically situated in the first user's home network (regardless of the current geographical location of the first user). Similarly, the application servers AS1 121a, AS2 122a, AS3 123a which are associated with the first user are application servers providing services to which the first user is registered. The SBC 111a (or P-CSCF) which is associated with the first user is the network module which provides SBC and/or P-CSCF functionality to support the first user's connection to the IMS network 111a. As will be understood by the skilled person, the SBC (or P_CSCF) may be situated in a visited network in which the first user is situated.

It will be appreciated that in some examples, particularly where the users are registered with the same IMS network, the first and second users may be associated with one or more of the same network modules. For example, the first and second users may both be subscribed to services provided by the same application servers 121, 122, 123. Additionally or alternatively, the first and second users may be registered with (or otherwise associated with) the same S-CSCF 114 (for example if the first and second users share a home network). However, the first and second users may equally be associated with different equivalent network modules (e.g. different S-CSCFs 114), which may for example be part of different IMS networks. For ease of description, network modules will be described and denoted differently herein when they are associated with different users and/or terminals. However, it will be understood that in practice the same network node or module may provide corresponding functionality to the different users and/or terminals.

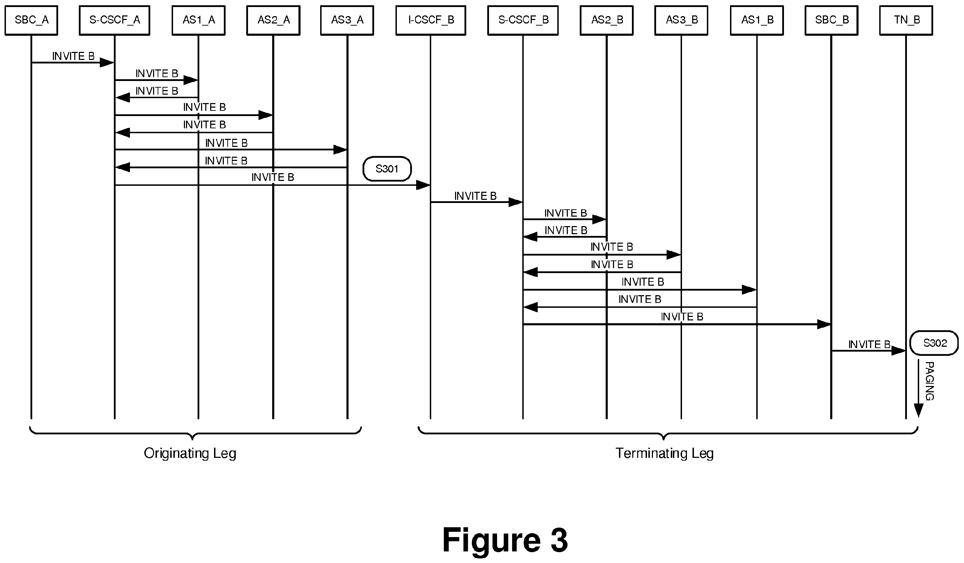

A typical example of signalling associated with the initiation of a communication session between the first and second users is illustrated in Figure 3. The same labelling of components is used in Figure 3 as was described above with reference to Figure 2.

IMS signalling is typically performed using the Session Initiation Protocol (SIP). As will be well understood by a skilled person, prior to initiating the communication session, the first and second users may be registered on their respective IMS networks 110a, 110b (for example by using the SIP Register procedure). The IMS registration procedure is not directly relevant to the present invention and will not therefore be described in any further detail herein.

As shown in Figure 3, a SIP INVITE message (denoted "INVITE B") addressed to the second terminal 101b is sent from the first terminal 101a to the second terminal 101b. A SIP INVITE message is presented herein as an example of a session setup message to be sent from a first terminal 101a to a second terminal 101b in order to establish a communication session between first and second users. However, it will be appreciated that in other examples, different signalling protocols could instead be used and a session setup message other than a SIP INVITE message could be used.

For ease of illustration, the first 101a and second 101b terminals and the telecommunications network 102a through which the first terminal 101a is connected are omitted from Figure 3. However, it will be understood that the SIP INVITE message "INVITE B" originates from the first terminal 101a, is first sent from the first terminal 101a through a telecommunications network 102a, to the SBC_A associated with the first user (not shown in Figure 3). Similarly, when the SIP INVITE message arrives at the telecommunications network (TN_B) 102b serving the second terminal, the SIP INVITE message is delivered to the second terminal 101b (not shown in Figure 3) through the telecommunications network (TN_B) 102b.

As is clearly depicted in Figure 3, the INVITE message is routed through the IMS network from the SBC_A associated with the first terminal 101a to the SBC_B associated with the second terminal 101b. The routing of the INVITE message includes an originating leg and a terminating leg.

The routing of the INVITE message through the originating leg comprises routing via a plurality of network modules (e.g. SBC_A, S-CSCF_A, AS1_A, AS2_A, AS3_A) which are associated with the first (originating) user or first (originating) terminal 101a. For example, in the originating leg, the S-CSCF_A on which the first user is registered acts as a signalling anchor for the INVITE message until the INVITE message is passed to the terminating leg at step S301.

The routing of the INVITE message through the terminating leg comprises routing via a plurality of network modules (e.g. I-CSCF_B, S-CSCF_B, AS1_B, AS2_B, AS3_B, SBC_B) which are associated with the second (terminating) user or second (terminating) terminal 101a. For example, in the terminating leg, the S-CSCF_B on which the second user is registered, acts as a signalling anchor for the INVITE message until the INVITE message is passed to the telecommunications network TN_B serving the second terminal 101b.

As was explained above, in practice, one or more of the network modules with which the first (originating) user is associated may be the same as one or more of the network modules with which the second (terminating) user is associated. However, even in such a situation the originating leg is still clearly differentiated from the terminating leg by virtue of which user or terminal is determinative of the routing through the IMS network. For example, the routing of the INVITE message in the originating leg is determined by the associations (e.g. registrations) of the first (originating) user or terminal, whereas the routing of the INVITE message in the terminating leg is determined by the associations (e.g. registrations) of the second (terminating) user or terminal. For instance, the INVITE message might still follow the same routing in the originating leg regardless of the location, associations and registrations of the terminating user and terminal.

Put another way, references herein to an originating leg are intended to refer to a portion of a signalling path through a network which is dependent on an originating user or terminal (e.g. the geographical location of the originating terminal or user, a registration of the originating user with one or more services provided in the network and/or any other form of association of the originating user or terminal with one or more network modules or services). Similarly, references herein to a terminating leg are intended to refer to a portion of a signalling path through a network which is dependent on a terminating user or terminal. In examples in which the first and second users are registered with different IMS networks, the originating leg may comprise signalling in a first IMS network 110a with which the first user is registered and the terminating leg may comprise signalling in a second IMS network 110b with which the second user is registered.

As is shown in Figure 3, the SBC_A routes the INVITE message to the S-CSCF_A on which the first (originating) user is registered. The S-CSCF_A then acts as a signalling anchor for routing the INVITE message to and from first, second and third application servers AS1_A, AS2_A, AS3_A. In general, the S-CSCF_A may forward the INVITE message to any application servers for which the originating terminal 101a is registered. For example, the application servers AS1_A, AS2_A, AS3_A may provide one or more services which are provided to all users of the network and/or may provide services for which the originating user is registered.

Whilst, the signalling depicted in Figure 3 includes three application servers AS1_A, AS2_A, AS3_A it will be understood that in general, the INVITE message may be routed to more or fewer than three application servers. It will be further understood that in some examples the functionality of one or more application servers might be collocated at a single node.

As is shown in Figure 3, the INVITE message may initially be forwarded to a first application server AS1_A. Once a response is received from the first application server AS1_A, the INVITE message is then forwarded to a second application server AS2_A. Upon receiving a subsequent response from the second application server AS2_A, the INVITE message is then forwarded to the third application server AS3_A.

Once the INVITE message has been forwarded to (and a response received from) all relevant application servers, the S-CSCF_A forwards the INVITE message to the terminating leg at step S301. In particular, the S-CSCF_A forwards the INVITE message to an I-CSCF_B associated with the second (terminating) user or terminal. The S-CSCF_A may, for example, look up (e.g. by querying one or more databases) a domain name associated with the second (terminating) terminal and then forwards the INVITE message to the I_CSCF_B registered for the obtained domain name. It will be appreciated that in the example which is illustrated in Figure 3, the routing of the INVITE message from the S-CSCF_A associated with the originating user and the I_CSCF_B associated with the terminating user at step S301 depends on properties of both the originating user and the terminating user. Step S301 is therefore a bridge between the originating and terminating legs.

The I-CSCF_B associated with the second (terminating) user forwards the INVITE message to a S-CSCF_B with which the second user is registered. As was explained above, the I-CSCF_B may query a HSS to locate the S-CSCF_B with which the second user is registered. The I-CSCF_B then forwards the INVITE message to the identified S_CSCF_B.

Similarly, to the S-CSCF_A in the originating leg, the S-CSCF_B in the terminating leg forwards the INVITE message to one or more application servers, which provide one or more services for the terminating user. In the example shown in Figure 3, the S-CSCF_B with which the second user is registered, forwards the INVITE message to a second application server AS2_B, forwards the INVITE message to a third application server AS3_B and then to a first application server AS1_B. Whilst in the example shown in Figure 3, the INVITE message is sent to the second application server AS2_B first, and then subsequently to the third AS3_B and first AS1_B application servers, in other examples the INVITE message may be sent to the application servers AS1_B, AS2_B and AS3_B in a different order.

Once the INVITE message has been routed through the terminating leg of the IMS network such that each application server AS1_B, AS2_B, AS3_B has received and responded to the INVITE message, the S-CSCF_B on which the terminating user is registered forwards the INVITE message to the SBC_B in the terminating leg. The SBC_B associated with the terminating user then forwards the INVITE message to the telecommunications network TN_B which serves the terminating terminal 101b.

In general, the routing of the INVITE message through both the originating and terminating legs is intended to ensure proper provision of and monitoring of one or more services which are provided by the IMS network. Whilst not described above, one or more of the network modules (e.g. an S-CSCF, application server, I-CSCF etc.) which receives the INVITE message may modify the INVITE message before forwarding it on to the next module in the routing procedure. For example, a CSCF may modify the INVITE message for the purposes of routing the INVITE message and/or an application server may modify an INVITE message in order to fulfil an intended service logic. Additionally or alternatively one or more of the network modules may modify data managed by a network module in order to record the passage of the INVITE message. Whilst not shown in Figure 3, one or more of the network modules which receives the INVITE message may respond to the sending module to acknowledge receipt of the INVITE message. For example, a network module which receives the INVITE message may respond with a SIP Trying response message to indicate that the INVITE message is being processed.

The INVITE message received by the telecommunications network TN_B serving the terminating terminal 101b is typically the mechanism by which the terminating telecommunications network TN_B is first alerted that the originating terminal is trying to establish a communication session with the terminating terminal 101b. Before the INVITE message can be forwarded through the telecommunications network TN_B to the terminating terminal, an active connection between the telecommunications network TN_B and the terminating terminal 101b must be in place over which the communication session can be established.

In some scenarios, when the telecommunications network TN_B receives the INVITE message, an active connection is already in place between the telecommunications network TN_B and the terminating terminal 101b. For example, a suitable communication bearer over which the INVITE message can be forward to the terminating terminal may already be in place. In at least some types of telecommunications network, in such a situation, the terminal 101b may be described as being in a connected state. For example, in an LTE telecommunications network the terminating terminal 101b may be in a Radio Resource Control (RRC) Connected state and an EPC Connection Management (ECM) Connected state. In such a state, a radio bearer between a RAN and the terminating terminal and an EPS bearer between a core network and the terminating terminal are already established. In such a scenario the INVITE message may be forwarded to the terminating terminal 101b over the established bearers with little or no delay.

However, in another scenario, there may be no active connection in place between the telecommunications network TN_B and the terminating terminal 101b over which the INVITE message can be sent. For example, in an LTE telecommunications network the terminating terminal may be in an RRC Idle state and/or an ECM Idle state in which no radio bearer and/or EPS bearer is established with the terminating terminal.

As will be well understood by a skilled person, when a telecommunications network TN_B receives a downlink communication (such as the INVITE message) for a terminal 101b with which no active communication is established, the telecommunications network TN_B typically begins a connection procedure in order to establish an active connection with the terminal 101b. For example, in an LTE network, the telecommunications network TN_B sends a paging message to the terminal 101b in order to trigger the terminal 101b to transition to an RRC Connected state, thereby allowing suitable radio and EPS bearers to be established. The telecommunications network TN_B can then forward the INVITE message to the terminating terminal 101b and the terminal 101b can respond in order to continue establishment of the communication session with the originating terminal 101a. This is illustrated at step S302 in Figure 3, at which the telecommunications network TN_B begins paging the terminating terminal 101b.

It will be appreciated that when no active connection with the terminating terminal 101b is in place upon receipt of the INVITE message at the telecommunications network TN_B, the time taken to establish an active connection introduces a delay into the establishment of a communication session with the originating terminal 101a. Typically, the INVITE message is held at the telecommunications network TN_B until a suitable bearer connection is established with the terminating terminal 101b and only then can the INVITE message be forwarded to the terminal 101b (and the procedure for establishing the communication session can resume).

As will be understood by a skilled person, in at least some types of telecommunications network a terminal 101b, which is in an Idle state (e.g. an RRC Idle state) does not continuously listen for paging messages from the telecommunications network TN_B, in order to reduce power consumption at the terminal. For example, in an LTE telecommunications network, a terminal 101b in an RRC Idle state uses a discontinuous reception (DRX) cycle, in which the terminal only turns on its receiver periodically in order to listen for paging messages from the telecommunications network TN_B (e.g. transmitted from a base station of the telecommunications network). Under such operation, the telecommunications network TN_B (e.g. a base station of the telecommunication network) has to wait for the next listening period when the terminal 101b turns its receiver on in order to successfully page the terminal 101b and begin the procedure for transitioning to an RRC Connected state.

The time delay caused by establishing a connection with the terminal 101b will in this case depend, at least in part, on the point in the DRX cycle of the terminal 101b at which the INVITE message arrives at the telecommunications network TN_B. For example, if the INVITE message arrives at a point in the DRX cycle shortly after the terminal has switched its receiver off, then a delay which is close to the full length of the DRX cycle will be introduced whilst the telecommunications network TN_B waits for the terminal's next listening period (when the terminal's receiver is turned on). Conversely, if the INVITE message arrives shortly before the terminal's next listening period, then the telecommunications network TN_B may be able to page the terminal 101b and trigger the terminal to establish an active connection with the telecommunications network TN_B, relatively soon after the INVITE message arrives.

In an illustrative example, a terminal in an RRC Idle state may operate under a DRX cycle having a length of approximately 640 milliseconds. In such an example, the average delay introduced before a paging message can be received at a terminal in an RRC Idle state might be of the order of about 350 milliseconds. In addition to this time period, the time taken to establish an active connection with the telecommunications network TN_B and set up the necessary bearers (once the paging message is received) might typically be of the order of about 150 milliseconds. In such an example the total time delay introduced into a communication session setup time (e.g. a call setup time) by the paging and connection procedure at the terminating terminal might therefore be of the order of about 500 milliseconds. Given that the call setup time of, for example, a VoLTE call might typically be of the order of about 2 to 5 seconds, it will be appreciated that the time delay introduced by the paging and connection procedure may represent a significant contribution to the total call setup time.

According to methods and apparatus disclosed herein, a time taken to establish a communication session between originating and terminating terminals may be reduced by triggering a connection procedure between the terminating telecommunications network and the terminating terminal, in advance of a session setup message (e.g. a SIP INVITE message) being received at the terminating telecommunications network. For example, as will be explained in further detail below, a network module may be provided in the originating leg of a session setup message routing procedure, where the network module generates and sends a connection request message such that the connection request message arrives at the terminating telecommunications network in advance of the session setup message.

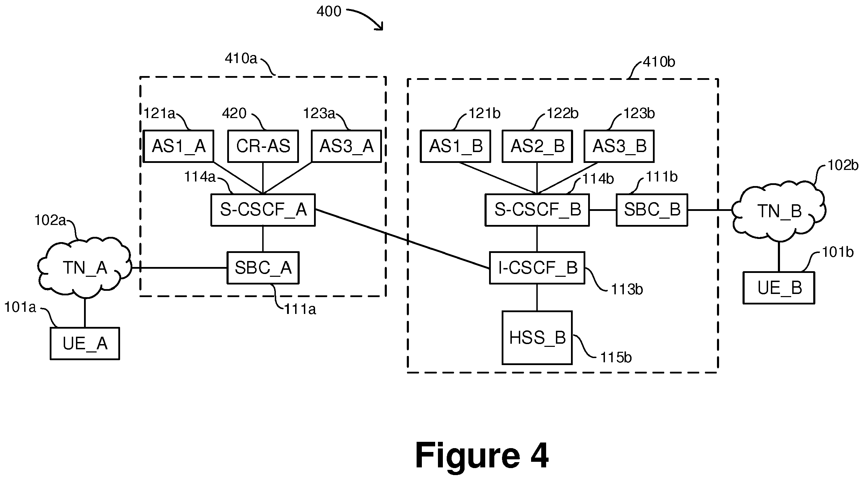

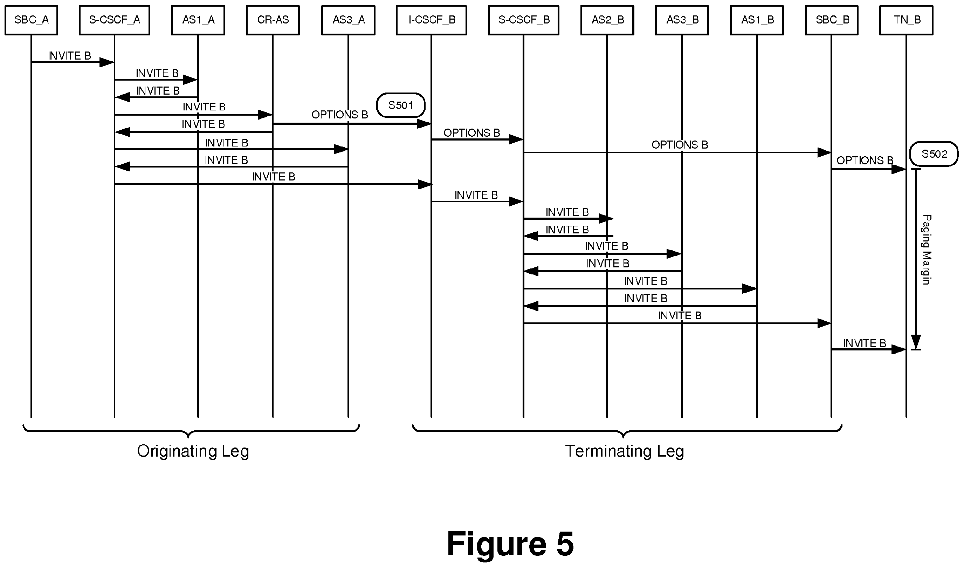

In order to facilitate further understanding of the methods and apparatus disclosed herein, a network system 400 including a network service system in accordance with the present disclosure is shown in Figure 4. An example of signalling associated with the initiation of a communication session in accordance with the present disclosure is shown in Figure 5.

The network system 400 depicted in Figure 4 includes many of the same network modules which were described above with reference to Figures 2 and 3. Equivalent network modules are denoted with the same reference numerals and no further detailed description of the same network modules will be provided again with reference to Figure 4. The network modules shown in Figure 4 differ from those described with reference to Figures 2 and 3 in that an originating IMS network 410a includes a connection request application server (CR-AS) 420 configured to generate a connection request message and send the connection request message towards the second terminal 101b. The CR-AS 420 forms part of the originating leg in the network system and is situated in the IMS network 410a with which the first user is registered. That is, the CR-AS 420 is associated with the first user (e.g. the first user may be registered with the CR-AS 420) and receives signalling originating from the first terminal 101a in the originating leg. The CR-AS 420 generates a connection request message and sends the connection request message to the terminating leg and towards the second terminal (via the telecommunications network TN_B serving the second terminal 101b).

Figure 5 illustrates the same example routing of an INVITE message through an IMS network as was described above with reference to Figure 3, with the only difference being that the application server previously denoted as AS2_A is provided in the form of the connection request application server CR-AS 420. No further detailed description of the same INVITE message routing procedure will therefore be provided with reference to Figure 5. Whilst in the example shown in Figure 5 the connection request application server CR-AS 420 takes the place of the second application server AS2_A and is the second application server to receive the INVITE message, in general a connection request application server CR-AS 420 may be provided at any point in the routing of the INVITE message during the originating leg. For example, the connection request application server CR-AS 420 might be the first application server to receive the INVITE message.

As is shown in Figure 5, in addition to and in parallel with the routing of the INVITE message, an additional message is generated by the CR-AS situated in the originating leg and sent towards the terminating terminal in advance of the INVITE message. In particular, the CR-AS is configured to generate, in response to receiving the INVITE message, a SIP OPTIONS message (denoted "OPTIONS B" in Figure 5). The SIP OPTIONS message is addressed to the second terminal 101b and is sent towards the telecommunications network TN_B which serves the second terminal 101b (step S501 in Figure 5). As will be explained in further detail below, the OPTIONS message serves as a connection request message for initiating connection of the second terminal 101b to the telecommunications network TN_B in advance of the arrival of the INVITE message.

As is shown in Figure 5, the connection request application server CR-AS sends the OPTIONS message towards the second terminal and to the terminating leg, before the INVITE message reaches the terminating leg. In the example shown in Figure 5, the application server sends the OPTIONS message (step S501) to the I-CSCF_B serving the second terminal. As was explained above, an I-CSCF typically serves as an initial point of contact in a terminating IMS network 410b for incoming signalling addressed to a terminal registered with the IMS network 410b. The application server CR-AS may identify the I-CSCF serving the second terminal 101b. For example, the CR-AS may look up a domain name associated with the second terminal 101b and then forward the OPTIONS message to the I-CSCF_B registered for the obtained domain name.

As will be understood by a skilled person and as was described above with reference to Figure 3, an INVITE message is routed via a number of different network modules before it is delivered to the telecommunications network TN_B serving the second terminal 101b. For example, the INVITE message may be exchanged one or more times between an S-CSCF and one or more application servers AS1, AS2, CR-AS, AS3 with which a user is registered, both in the originating leg and the terminating leg. The routing of the INVITE message typically ensures proper provision and monitoring of one or more services provided by the IMS network. It may not therefore be possible to easily reduce the number of network modules via which an INVITE message is routed through the IMS network whilst preserving proper provision and monitoring of services in the IMS network.

In contrast to the INVITE message, an OPTIONS message may take a more direct route to the node to which it is addressed. For example, the OPTIONS message may need not necessarily be routed via application servers with which a user is registered. Consequently, the OPTIONS message may be routed from the connection request application server CR-AS to the second terminal 101b (via the telecommunications network TN_B serving the second terminal 101b) faster than the INVITE message is routed from the application server CR-AS to the second terminal 101b. For example, as is shown in Figure 5, the application server CR-AS may send the OPTIONS message directly to a terminating network module (the I-CSCF_B in the example of Figure 5) without routing the OPTIONS message via the S-CSCF_A and other application servers AS1_A, AS3_A serving the first user. Since, the application server CR-AS sends the OPTIONS message directly to a terminating network module (the I-CSCF_B in the example of Figure 5), the OPTIONS message reaches the terminating leg in advance of the INVITE message. The OPTIONS message therefore serves to alert the terminating IMS network 410b to an incoming request to initiate a new communication session, before the INVITE message arrives at the terminating leg.

The terminating IMS network may handle the OPTIONS message using a standard procedure for handling OPTIONS messages. For example, the I-CSCF_B may query a HSS to locate the S-CSCF_B with which the second user is registered. The I-CSCF_B then forwards the INVITE message to the identified S-CSCF_B. The S-CSCF_B which serves the second user may recognise that the OPTIONS message can be sent towards the second terminal 101b without further routing through the IMS network (as may be required with an INVITE message) and forwards the OPTIONS message to a module SBC_B for performing session border control functionality for the second terminal and between the terminating IMS network 410b and the telecommunications network TN_B serving the second terminal 101b. The OPTIONS message is then forwarded to the telecommunications network TN_B from the SBC_B.

As explained above, the OPTIONS message may be routed through the IMS network more efficiently than the INVITE message. Consequently, the OPTIONS message arrives at the telecommunications network TN_B serving the second terminal 101b in advance of the INVITE message. The telecommunications network TN_B may receive the OPTIONS message and establish an active connection with the second terminal 101b in response to receiving the OPTIONS message. The OPTIONS message may therefore serve as advance warning of an incoming request to initiate a communication session with the second terminal 101b.

In some examples, the OPTIONS message may be a standard OPTIONS message with no special markings or modifications. The generation and transmission of a standard OPTIONS message addressed to the second terminal may be sufficient to begin establishment of an active connection with the second terminal 101b. In other examples, the application server CR-AS may modify the OPTIONS message in some way. For example, the application server CR-AS may mark one or more fields of the OPTIONS message and/or may include one or more additional fields in the OPTIONS message, in order to designate the OPTIONS message as a connection request message. The telecommunications network TN_B may read one or more fields of the OPTIONS message and determine that the OPTIONS message serves as notification of an incoming request to initiate a communication session with the second terminal 101b. Any modification of the OPTIONS message may, for example, be used to indicate the priority with which the message should be treated in order to reduce the processing time of the message. However as explained above, in at least some examples, no special modification to the OPTIONS message may be made.

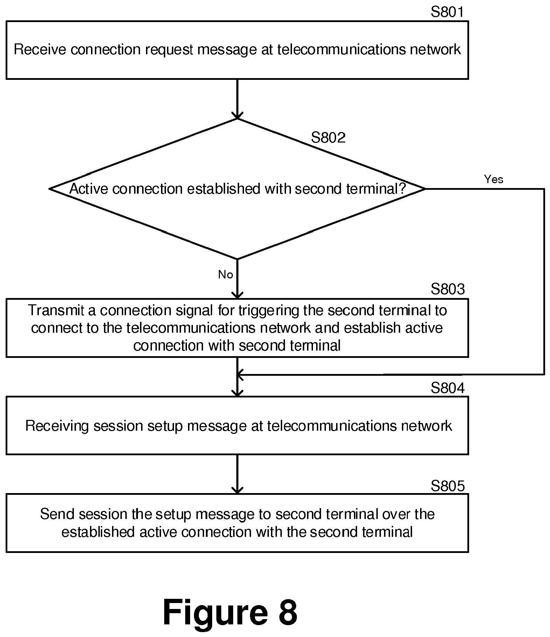

As will be described in further detail below (for example, with reference to Figure 8), in response to receiving the OPTIONS message, the telecommunications network may begin the process of establishing an active connection with the second terminal 101b in advance of receiving the INVITE message. For example, if upon receipt of the OPTIONS message, no active connection is established between the telecommunications network TN_B and the second terminal 101b (e.g. the terminal is in an RRC and/or ECM Idle state), the telecommunications network TN_B may initiate a connection procedure with the second terminal 101b. For example, as is indicated in Figure 5, the telecommunications network may begin paging the second terminal at step S502.

As is clearly depicted in Figure 5, the OPTIONS message arriving at the telecommunications network TN_B in advance of the INVITE message, provides a paging margin during which the telecommunications network TN_B can begin establishing an active connection with the second terminal 101b in advance of the INVITE message arriving at the telecommunications network TN_B. Consequently, an active connection can be established with the second terminal earlier in the communication session initiation process. Any time delay attributed to the establishment of an active connection between the terminal 101b and the telecommunications network TN_B may therefore be reduced or even eliminated. The paging margin provided by the OPTIONS message may thus serve to reduce the total time required to setup the communication session between the first 101a and second terminals 101b (e.g. a call setup time).

In an illustrative example and using the signalling shown in Figure 5, the OPTIONS message might be expected to arrive at the telecommunications network TN_B about 700 milliseconds before the INVITE message arrives at the telecommunications network TN_B. The paging margin depicted in Figure 5 might therefore be of the order of about 700 milliseconds. As was explained above, the total time needed in order to transition a terminal from an Idle state to a Connected state and thereby establish an active connection with the terminal might, in at least some examples, be of the order of 500 milliseconds. In such an illustrative example, the paging margin provided by generating and sending the OPTIONS message might therefore be sufficient to establish an active connection with the second terminal 101b before the INVITE message arrives at the telecommunications network TN_B. In such a scenario, the INVITE message may be sent to the second terminal 101b over the active connection with little or no delay, even if the terminal 101b was in an Idle state (i.e. no active connection with the telecommunications network TN_B was established) when the INVITE message was first generated and sent from the originating terminal 101a.

An example was described above in which the paging margin (the time difference between the arrival of the OPTIONS message and the INVITE message at the telecommunications network TN_B) provided by the OPTIONS message is sufficient to establish an active connection with a terminal (e.g. if the terminal is initially in an Idle state). However, even if the paging margin is not sufficient to establish the active connection, the OPTIONS message may still serve to reduce the total connection time.

For example, as was explained above, if no active connection is established with the second terminal 101b when the OPTIONS message is received at the telecommunications network TN_B, the telecommunications network TN_B may begin paging the second terminal 101b in an attempt to establish an active connection with the terminal 101b (e.g. to transition the terminal from an Idle state to a Connected state). In some scenarios, the INVITE message might arrive at the telecommunications network TN_B before the active connection with the second terminal 101b has been established. For example, if the OPTIONS message arrives at the telecommunications network TN_B at a point in the DRX cycle of the terminal 101b shortly after a receiver of the terminal 101b has been turned off, the telecommunications network TN_B may have to wait for most of the DRX cycle length before it can successfully page the terminal. Such a scenario might result in a relatively long time period before an active connection with the terminal 101b is established, during which time the INVITE message might arrive at the telecommunications network TN_B. If the INVITE message arrives at the telecommunications network TN_B before an active connection has been established with the second terminal 101b, there may be some time delay before the INVITE message can be forwarded to the terminal. However, since the OPTIONS message has still triggered the telecommunications network TN_B to begin the procedure for establishing an active connection with the terminal before the arrival of the INVITE message, the time delay will still be reduced, when compared to waiting for the INVITE message before triggering the connection procedure. The OPTIONS message still therefore serves to reduce the total time taken for establishing a communication session between the first and second terminals.

It will be appreciated that the earlier that the OPTIONS message is generated and sent towards the telecommunications network serving the second terminal, the greater the time period can be provided (the paging margin) in which an active connection can be established. In the examples described herein, the OPTIONS message is generated during the originating leg of the routing of the INVITE message and sent to the terminating leg (e.g. towards the telecommunications network serving the second terminal) before the INVITE message reaches the terminating leg. The OPTIONS message is therefore generated relatively early in the routing of the INVITE message thereby increasing the duration of the paging margin.

In the example described above with reference to Figure 5, the OPTIONS message is sent to and routed through the terminating IMS network 410b using standard routing procedures for an OPTIONS message. This may require no special modification of any modules in the terminating leg and/or may not require the originating leg (e.g. the CR-AS) to have any special knowledge relating to the terminating terminal 101b or the terminating network 410b. However, in at least some examples, the connection request application server CR-AS may have access to information regarding the second terminal 101b which allows the OPTIONS message to be routed to the telecommunications network TN_B serving the second terminal more efficiently in order to increase the paging margin.

For example, in some scenarios, the terminating terminal 101b may be registered with one or more application servers (which may include the connection request application server CR-AS) in the originating IMS network 410a. This may in particular be applicable, where the first and second users are registered with the same IMS network and are therefore both served by the same network service provider. As will be understood by a skilled person, when a user initially connects to an IMS network they typically undergo a registration process which is typically referred to as third party registration. As part of the registration process, a SIP REGISTER message may be forwarded to all application servers in the IMS network which provide services to which the user seeks a registration. For example, a S-CSCF serving a registering user may forward a SIP REGISTER message to one or more application servers so as to register the user to services provided by the application servers.

In at least some examples, a third party registration message (e.g. a SIP REGISTER message) may be received by a connection request application server CR-AS, thereby allowing the application server CR-AS to access information related to the third party registration.. For example, in some examples both a first and second user may be registered with the same IMS network such that the CR-AS receives registration information related to both the first and second users. The CR-AS may store registration information associated with registering users and/or terminals, for example, in a registration information repository or database. It will be appreciated that the registration information repository may be implemented as part of the CR-AS or as part of one or more separate elements in communication with the CR-AS. The stored registration information may, for example, be read from a SIP REGISTER message forwarded to the CR-AS as part of a third party registration process.

As was explained above, a CR-AS may be configured to store registration information associated with one or more terminals and/or users which register at the CR-AS. The registration information may enable more efficient routing of a connection request message from the CR-AS to a terminal registered at the CR-AS. For example, the registration information for a given terminal may include an indication of a network module configured to perform session border control (SBC) functionality for the given terminal (e.g. between the IMS network serving the terminal and the telecommunications network serving the terminal). The registration of an indication of a network module configured to perform SBC functionality for a given terminal at the CR-AS may allow the CR-AS to route a connection request message (e.g. a SIP OPTIONS message) directly, or at least more efficiently, to the second terminal. The indication of a network module configured to perform SBC functionality for a given terminal may, for example, comprise a contact address of the given terminal through the SBC. For example, an indication of a network module configured to perform SBC functionality for the second terminal UE_B may comprise a contact address of the second terminal UE_B through the SBC_B in the terminating IMS network.

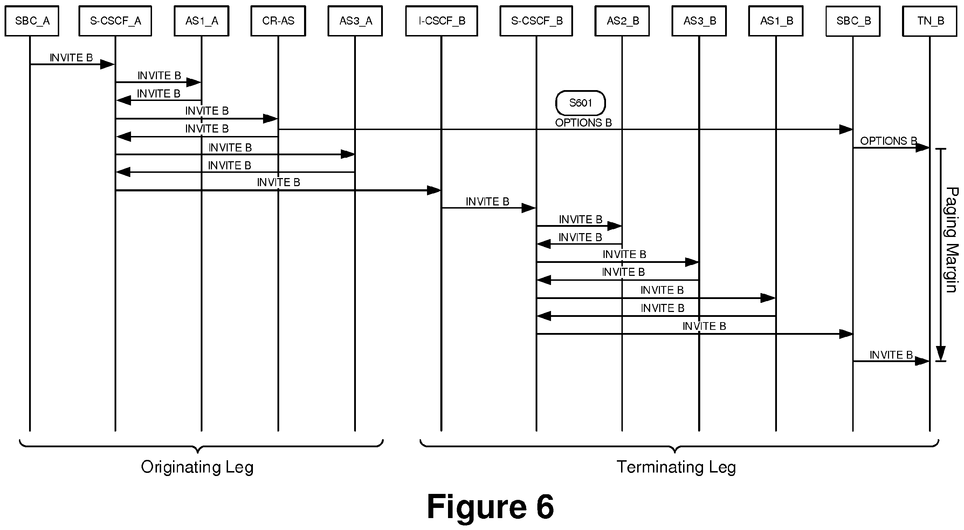

In order to facilitate further understanding of a more efficient routing of a connection request message according to aspects of the present disclosure, an alternative example of signalling associated with the initiation of a communication session in accordance with the present disclosure is shown in Figure 6. The network modules shown in Figure 6 are equivalent to those described above with reference to Figures 4 and 5 and will not therefore be described in detail again with reference to Figure 6. Furthermore, the routing of an INVITE message between the network modules is the same as was described above with reference to Figures 3 and 5 and will not be described again with reference to Figure 6.

In the example depicted in Figure 6, in response to receiving the INVITE message as part of the originating leg, the connection request application server CR-AS generates a connection request message in the form of an OPTIONS message and sends the OPTIONS message towards the second terminal 101b (via the telecommunications network TN_B). In contrast to the example shown in Figure 5, the CR-AS may route the OPTIONS message to the telecommunications network TN_B in a more efficient manner. For example, as is shown in Figure 6 at step S601, the CR-AS sends the OPTIONS message directly to a network module SBC_B providing session border control functionality for the second terminal. The SBC_B then forwards the OPTIONS message directly to the telecommunications network TN_B.

Comparing the example shown in Figure 6 with the example shown in Figure 5, it can be seen that in the example of Figure 6 the OPTIONS message reaches the telecommunications network TN_B serving the second terminal 101b in less steps than in Figure 5. That is, the OPTIONS message is routed to the telecommunications network TN_B more efficiently in Figure 6 than in Figure 5. Consequently, the OPTIONS message arrives at the telecommunications network TN_B earlier and the paging margin (the time difference between receiving the OPTIONS message and the INVITE message at the telecommunications network TN_B) is increased.

The more efficient routing of the OPTIONS message as shown in Figure 6, may be possible if, for example, registration information related to both the first terminal 101a and the second terminal 101b is received at the same connection request application server CR-AS. For instance, if the first and second users are registered with the same IMS network then the connection request application server CR-AS may receive registration information related to both the first and second users (e.g. by receiving a SIP REGISTER message). Registration with the CR-AS may, for example, be performed by way of an IMS third party registration procedure. As was explained above, when the second terminal registers with the IMS network, the CR-AS may store registration information associated with the second terminal including an indication of a network module SBC_B configured to perform session border control (SBC) functionality for the second terminal 101b. For example, the connection request application server CR-AS may store a contact address of the second terminal through the SBC_B.

When the CR-AS receives the INVITE message addressed to the second terminal 101b, the CR-AS may consult its registration information repository to see if the second terminal 101b is registered with the CR-AS. If the second terminal 101b is registered with the CR-AS, the CR-AS may obtain from the registration information repository, an indication of the network module SBC_B configured to perform SBC functionality for the second terminal 101b. For example, the CR-AS may obtain from the registration information repository, a contact address of the second terminal 101b through the SBC_B serving the second terminal. As is shown at step S601 in Figure 6 this may allow the CR-AS to send the OPTIONS message directly to the SBC_B serving the second terminal 101b. The OPTIONS message can therefore be routed to the telecommunications network TN_B serving the second terminal 101b with improved efficiency.

As was explained above, the CR-AS may consult its registration information repository to see if the second terminal 101b is registered with the CR-AS. In some situations, the CR-AS may determine that the second terminal 101b is not registered with the CR-AS or, for example, that the registration information stored for the second terminal 101b is not sufficiently up to date. In such a situation the CR-AS may not be able to send the OPTIONS message directly to the SBC_B serving the second terminal. For example, when the second terminal 101b is not registered with the CR-AS, the CR-AS may not have knowledge of the SBC_B which serves the second terminal 101b. In this situation, the CR-AS may, for example, send the OPTIONS message to the I-CSCF_B serving the second terminal 101b and the routing of the OPTIONS message may follow the path described above and shown in Figure 5.

In at least some examples, the connection request application server CR-AS may determine whether or not to generate and send a connection request message (e.g. in the form of an OPTIONS message). That is, in some scenarios the connection request application server CR-AS may determine not to generate and/or send a connection request message. The connection request application server CR-AS may determine whether or not to generate and send a connection request message based on one or more criteria. The one or more criteria may, for example, include an estimated paging margin (i.e. the time difference between an OPTIONS message and the INVITE message arriving at the telecommunications network TN_B serving the second terminal), which would result from generating and sending a connection request message. For example, if an estimated paging margin which will result from generating and sending an OPTIONS message is greater than a threshold margin then the connection request application server CR-AS may determine to generate and send the OPTIONS message. If the estimated paging margin is less than the threshold margin then the connection request application server CR-AS may determine not to generate or send the OPTIONS message.

As was explained above, the paging margin which is provided by generating and sending a connection request message (e.g. OPTIONS message) may be greater if the second (terminating) terminal 101b is registered with the same IMS network as the first (originating) terminal 101a. For example, as was explained above with reference to Figure 6, if the second terminal 101b is registered with the same IMS network in which the connection request application server CR-AS is situated, the connection request application server CR-AS may have access to registration information related to the second terminal 101b. As was further described above, access to registration information related to the second terminal 101b may allow a connection request message (e.g. OPTIONS message) to be routed to the second terminal more efficiently and may therefore increase the paging margin provided by the connection request message.

In some examples, the connection request application server CR-AS may determine to generate and send the connection request message if it is determined that the second terminal 101b is registered with the same IMS network. For example, the connection request application server CR-AS may consult its registration information repository to see if it has access to registration information related to the second terminal 101b. If the connection request application server CR-AS has access to registration information related to the second terminal 101b then the application server CR-AS may determine to generate and send the connection request message. For example, the connection request message may be routed to the telecommunications network TN_B serving the second terminal in a similar way to the routing described above with reference to Figure 6. As was explained above, this may allow a relatively long paging margin to be provided.

If the connection request application server CR-AS determines that it does not have access to registration information related to the second terminal 101b (e.g the second terminal is not registered on the same IMS network), the connection request application server CR-AS may determine not to generate or send a connection request message. As was explained above, without access to registration information related to the second terminal, the connection request message may be routed to the terminating telecommunications network TN_B less efficiently. For example, the connection request message may first be sent to an I-CSCF_B serving the second terminal 101b. The connection request application server CR-AS may determine that such a routing provides an insufficient paging margin and may therefore determine not to generate or send the connection request message.

In general, any suitable criteria may be used in order to determine whether or not to generate and send a connection request message. In some examples, a connection request application server CR-AS may be configured to always generate and send a connection request message in response to receiving a session setup message (e.g. an INVITE message) in the originating leg. In some examples, a connection request application server CR-AS may be configured to generate and send a connection request message in response to receiving a session setup message in the originating leg, when it is determined that one or more criteria have been met. That is, a connection request application server CR-AS configured to generate a connection request message in response to receiving a session setup message in the originating leg, may not generate a connection request message in every scenario. For example, in some scenarios (e.g. when one or more criteria are not met) the connection request application server CR-As may not generate a connection request message.

As was explained above, in some situations, the OPTIONS message may be more efficiently routed to the telecommunications network TN_B serving the second terminal 101b which may increase the paging margin (relative, for example, to the paging margin realised using the procedure shown in Figure 5). In general, increasing the paging margin (whether by using the method described above with reference to Figure 6 or by other means) may increase the chances that an active connection between the telecommunications network TN_B and the second terminal 101b can be established before the INVITE message arrives at the telecommunications network TN_B, thereby allowing the INVITE message to be forwarded to the second terminal 101b with little or no delay. Furthermore, even if an active connection with the second terminal 101b is not established by the time that the INVITE message arrives at the telecommunications network TN_B, an increased paging margin generally means that the telecommunications network TN_B begins paging the terminal 101b earlier and thus any delay in forwarding the INVITE message (whilst an active connection is established) is reduced.

In the examples described above, an INVITE message is routed through a network service system in the form of an IMS network in order to setup a communication session between first and second terminals. Furthermore, an OPTIONS message is generated and sent towards a telecommunications network serving the second terminal in order to trigger connection of the second terminal to the telecommunications network. It will be understood that the use of an INVITE message and an OPTIONS message in an IMS network is presented merely as an example implementation of the methods and apparatus according to the present disclosure. For instance, a SIP INVITE message is presented herein merely as an illustrative example of a session setup message. Furthermore, a SIP OPTIONS message or a modified SIP OPTIONS message is presented herein merely as an illustrative example of a call request message. In at least some examples, a session setup message and/or a call request message other than a SIP INVITE and/or SIP OPTIONS message may be used. In general, any form of message which serves as a request to setup a communication session (a session setup message) and any form of message which serves as a request to establish a connection between a terminal and a telecommunications network (a connection request message) may be used.

Furthermore, one or more IMS networks are described herein merely as an example of a network service system for initiating and/or facilitating a communication session between a first and second terminal. The teachings provided herein with respect to one or more IMS networks are not limited to use in an IMS network and may be applied to any other suitable form of network service system.

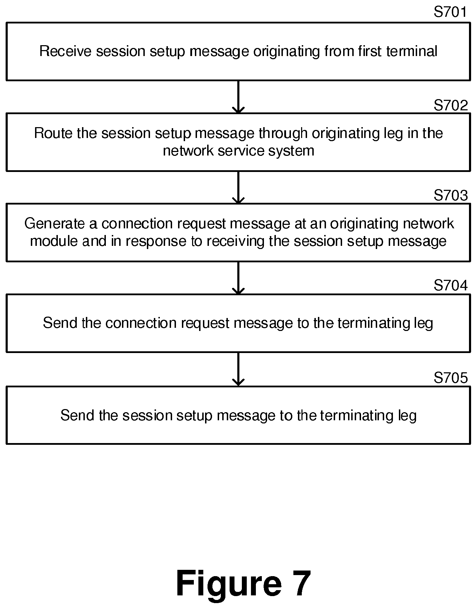

Figure 7 illustrates an example method for initiating a communication session between a first terminal and a second terminal in accordance with the present disclosure. The method of Figure 7 may be implemented in one or more IMS networks or in any other suitable form of network service system. The method starts at step S701 at which a session setup message originating from the first terminal is received at the network service system (e.g. an originating IMS network with which the first user is registered). The first terminal may, for example, connect to the network service system through a telecommunications network serving the first terminal and may send the session setup message to the network service system through the telecommunications network. The session setup message is addressed to the second terminal and comprises a request to initiate a communication session between the first and second terminals. For example, the session setup message may comprise a request to establish a voice or video call with the second terminal. In at least some examples, the session setup message may comprise a SIP INVITE message.

At step S702, the session setup message is routed through an originating leg in the network service system. The originating leg of the route of the session setup message comprises a plurality of originating network modules which serve the first terminal. For example, the first terminal and/or the first user may be registered with or otherwise associated with the originating network modules.

At step S703, a connection request message is generated at an originating network module in response to receiving the session setup message in the originating leg. The originating network module may comprise a network service module for providing a service in the network service system. For example, when the method is implemented in an IMS network, the originating network module may comprise an application server. The connection request message may be addressed to the second terminal. The connection request message may be indicative of an incoming request for initiating a communication session with the second terminal. For example, the connection request message may serve as advance warning of the session setup message.

In at least some examples, the connection request message may comprise a SIP OPTIONS message. The SIP OPTIONS message may be modified in order to be indicative of an incoming request for initiating a communication session. For example, one or more fields of the SIP OPTIONS message may be modified and/or one of more fields of the SIP OPTIONS message may be added, to indicate that it serves as a connection request message. Alternatively, the SIP OPTIONS message may comprise a standard SIP OPTIONS message addressed to the second terminal.

In some examples, at step S703 it may be determined whether or not to generate the connection request message. The determination may be based on one or more criteria as described above. For example, it may be determined whether or not the second terminal is registered with the same network service system as the first terminal. For instance it may be checked whether or not access to registration information related to the second terminal is available. If the second terminal is registered with the same network service system (e.g. access to registration information related to the second terminal is available) then it may be determined to generate the connection request message. If the second terminal is not registered with the same network service system (e.g. access to registration information related to the second terminal is not available) then it may be determined not to generate the connection request message. In some examples a connection request message may be generated even if the second terminal is not registered with the same network service system as the first terminal.

At step S704, the connection request is sent to a terminating leg. For example, the connection request message may be sent towards the second terminal (via a telecommunications network serving the second terminal). Sending the connection request message to the terminating leg may comprise sending the connection request message to a network service system (e.g. an IMS network) serving the second (terminating) user. The connection request is sent to the terminating leg (e.g. towards the telecommunications network serving the second terminal) before the session setup message reaches the terminating leg.

The terminating leg may comprise a plurality of terminating network modules which serve the second terminal. For example, the second terminal and/or the second user may be registered with or otherwise associated with the terminating network modules. In practice one or more of the originating and terminating network modules may be the same. For example, the network service system may comprise one or more network modules with which both the first and second terminals are registered or otherwise associated. In other examples, there may be no overlap between the originating and terminating modules (e.g. if the first and second users are registered with different network service systems, such as IMS networks).

In general, the originating and terminating legs may be distinguished by virtue of the entity or user which is determinative of the routing of the session setup message. For example, in the originating leg, the network modules via which the session setup message is routed may be dependent on the first terminal and/or first user (e.g. one or more services to which the first user is registered). In the terminating leg, the network modules via which the session setup message is routed may be dependent on the second terminal and/or the second user (e.g. one or more services to which the second user is registered).

As was explained above, the originating network service system sends the connection request message to the terminating leg (at step S703). For example, an originating network module (e.g. the network service module which generates the connection request message at step S704) may identify a terminating network module associated with the second terminal and in the terminating leg and may send the connection request message to the identified terminating network module. The identified terminating module may forward the connection request message towards the telecommunications network before the session setup message reaches the terminating network module.

The identified terminating network module may, for example, comprise a network module configured to perform session border control for the second terminal in the terminating leg. For example, the identified terminating network module may comprise a network module configured to perform session border control for the second terminal in a network service system (e.g. an IMS network) serving the second terminal. The session border control may be performed for the border between the network service system serving the second terminal and the telecommunications network serving the second terminal. The terminating network module configured to perform session border control for the second terminal may be identified from registration information associated with the second terminal.

The identified terminating network module may, for example, comprise a network module configured to act as an initial point of contact in the network service system for signalling addressed to the second terminal.

In at least some examples, the originating network module which generates the connection request message may check whether it has access to registration information associated with the terminating terminal. If the originating module has access to the registration information, it may consult the registration information in order to identify the terminating network module to which to send the connection request message. For example, the originating module may look up a terminating network module configured to perform session border control for the second terminal. If the originating module does not have access to registration information associated with the terminating terminal, then the originating module may identify a terminating network module configured to act as an initial point of contact in the network service system for signalling addressed to the second terminal. As was explained above, in some examples, if the originating network module does not have access to registration information associated with the terminating terminal, then the originating network module may determine not to generate the connection request message and therefore does not send a connection request message to the terminating leg.

At step S705, the session setup message is sent to the terminating leg in order to enable delivery of the session setup message to the second terminal. As was explained above, the connection request message is sent to the terminating leg in advance of the session setup message being sent to the terminating leg, such that the connection request message arrives at the telecommunications network serving the second terminal in advance of the session setup message. This provides a paging margin (a time period between the connection request message and the session setup message arriving at the telecommunications network), during which the telecommunications network can at least start to establish an active connection with the second terminal.

It will be appreciated that at least some of the steps shown in Figure 7 may be carried out concurrently. For example, as is made clear throughout this description, the routing of the session setup message through the network service system (step S702 in Figure 7) may be carried out whilst the connection request message is generated and sent to the terminating leg (steps S703 and S704 in Figure 7). The flow chart shown in Figure 7 should not therefore be taken to be a strict indication of the sequence of method steps. For example, generally the method does not wait for step S702 to finish before preceding to step S703.

Figure 8 illustrates an example method for initiating a communication session between a first terminal and a second terminal in accordance with the present disclosure as facilitated by a telecommunications network serving the second terminal. As was explained above, the telecommunications network may comprise any suitable form of network for providing access to the network service system for the second terminal. The telecommunications network may, for example, comprise a telecommunications network including a core network and a Radio Access Network (RAN). The telecommunications network may, for example, comprise an LTE and/or New Radio (NR) telecommunications network.

The method starts at step S801 at which the connection request message is received at the telecommunications network serving the second terminal. The connection request message may be addressed to the second terminal. As was explained above, the telecommunications network receives the connection request message in advance of the session setup message. The connection request message may therefore serve as advance warning of an incoming request to establish a communication with the second terminal.

At step S802, the telecommunications network checks whether an active connection with the second terminal is already established. For example, the telecommunications network may check whether a radio bearer and/or an EPS bearer are already established with the second terminal. For instance, the telecommunications network may check whether the second terminal is currently in an ECM Idle or Connected state and/or may check whether the second terminal is currently in an RRC Idle or Connected state.

If an active connection with the second terminal is already established (e.g. the second terminal is in an ECM and/or RRC Connected state), then the method proceeds to step S804.

If no active connection with the second terminal is in place then the method proceeds to step S803. At step S803, the telecommunications network transmits a connection signal for triggering the second terminal to connect to the telecommunications network. For example, if the telecommunications network includes a RAN then at least one node of the RAN (e.g. a base station) may transmit a radio frequency signal to be received by the second terminal. The radio frequency signal may, for example, comprise a paging message, as is well known in the art.

At step S803 the telecommunications network further establishes an active connection with the second terminal. For example, the second terminal may respond to the connection signal by transmitting a response to the telecommunications network. The telecommunications network may receive the response to the connection signal from the second terminal and may establish an active connection with the second terminal in response to receiving the response from the second terminal. The process of establishing an active connection with the second terminal may include exchange of one or more further messages between the telecommunications network and the second terminal and may follow one or more established connection procedures known in the art (e.g. the RRC connection procedure).

At step S804, the telecommunications network receives a session setup message at the telecommunications network and addressed to the second terminal. In some examples, by the time that the session setup message is received at the telecommunications network, an active connection may have been established between the telecommunications network and the second terminal. For example, an active connection may have already been in place when the connection request message was received (in which case the method proceeded straight to step S804) or the time period (paging margin) between receiving the connection request message and the session setup message was sufficient to establish an active connection.

If an active connection with the second terminal is already established when the session setup message is received at the telecommunications network then the method may proceed to step S805 with little or no delay. Alternatively, if an active connection with the second terminal is still being established (e.g. a connection procedure is ongoing) then the telecommunications network may wait until an active connection is in place before proceeding to step S805.

At step S805, the telecommunications network may send the session setup message to the second terminal over the established active connection with the second terminal. Whilst not shown in Figure 8, the second terminal may respond to the session setup message and may exchange one or more further messages with the first terminal through the network service system in order to set up a communication session (e.g. a voice or video call) with the first terminal.

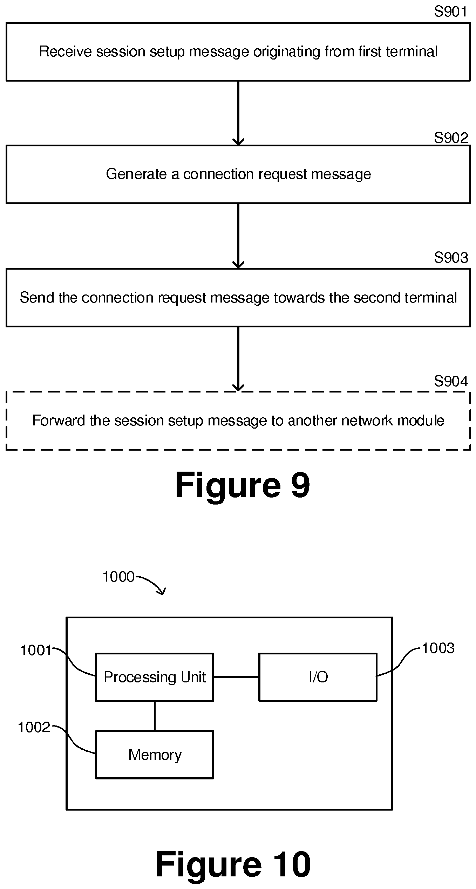

Figure 9 illustrates an example method for initiating a communication session between a first terminal and a second terminal in accordance with the present disclosure as facilitated by a network service module implemented in a network service system for initiating the communication session. The network service module may, for example, comprise a network module forming part of an IMS network. For example, the network service module may comprise an application server in an IMS network (e.g. the connection request application server CR-AS described above).

The method starts at step S901 at which the network service module receives a session setup message originating from the first terminal and addressed to the second terminal. The session setup message comprises a request to initiate the communication session between the first terminal and the second terminal and may, for example, be in the form of a SIP INVITE message. The session setup message is received at the network service module as part of an originating leg of a routing of the session setup message through the network service system. That is, the network service module has some form of association with the first terminal (e.g. the first terminal is registered with the network service module) such that session setup messages originating from the first terminal are routed via the network service module.

At step S902, the network service module generates a connection request message. The connection request message is a message, addressed to the second terminal, and for initiating connection of the second terminal to a telecommunications network serving the second terminal. For example, the connection request message may be indicative of a request to initiate a communication session with the second terminal. The connection request message may therefore serve as advance warning of the session setup message. The connection request message may, for example, comprise a SIP OPTIONS message addressed to the second terminal. A SIP OPTIONS message may be modified in order to be indicative of a request to initiate a communication session with the second terminal. For example, one or more fields of the SIP OPTIONS message may be modified and/or one or more fields may be added to the SIP OPTIONS message to indicate that it is indicative of a request to establish a connection with the second terminal. Alternatively, the SIP OPTIONS message may comprise a standard SIP OPTIONS message addressed to the second terminal.

In some examples, at step S902 it may be determined whether or not to generate the connection request message. The determination may be based on one or more criteria as described above. For example, it may be determined whether or not the second terminal is registered with the same network service system as the first terminal. For instance it may be checked whether or not access to registration information related to the second terminal is available. If the second terminal is registered with the same network service system (e.g. access to registration information related to the second terminal is available) then it may be determined to generate the connection request message. If the second terminal is not registered with the same network service system (e.g. access to registration information related to the second terminal is not available) then it may be determined not to generate the connection request message. In some examples a connection request message may be generated even if the second terminal is not registered with the same network service system as the first terminal.

At step S903 the network service module sends the connection request towards the second terminal (via a telecommunications network serving the second terminal). The network service module sends the connection request message towards the second terminal before the session setup message reaches a terminating leg. The connection request message therefore reaches the terminating leg in advance of the session setup message and serves as advance warning of the session setup message.

At step S903 the network service module may identify a terminating network module associated with the second terminal and in the terminating leg and may send the connection request message to the identified terminating network module. The identified terminating module may forward the connection request message towards the telecommunications network before the session setup message reaches the terminating network module.

The identified terminating network module may, for example, comprise a network module configured to perform session border control for the second terminal. In such an example, the terminating network module configured to perform session border control for the second terminal may be identified from registration information associated with the second terminal.

The identified terminating network module may, for example, comprise a network module configured to act as an initial point of contact in the network service system for signalling addressed to the second terminal.

In at least some examples, the network service module may check whether it has access to registration information associated with the terminating terminal. If the network service module has access to the registration information, it may consult the registration information in order to identify the terminating network module to which to send the connection request message. For example, the network service module may look up the terminating network module configured to perform session border control for the second terminal. If the network service module does not have access to registration information associated with the terminating terminal, then the network service module may identify a terminating network module configured to act as an initial point of contact for signalling addressed to the second terminal. As was explained above, in some examples, if the network service module does not have access to registration information associated with the terminating terminal, then the network service module may determine not to generate the connection request message and therefore does not send a connection request message to the terminating leg.

Optionally, at step S904 the network service module forwards the session setup message to another network module in the network service system. For example, the session setup message is forwarded to another network module in the originating leg of the routing of the session setup message through the network service system. The network service module might, for example, send the session setup message back to the network module from which the session setup message was received, which might act as a signalling anchor (such as an S-CSCF) in the originating leg of the network service system.

Whilst step S904 is depicted and described as being performed after step S903, it will be appreciated that in some examples step S904 might be performed before step S904. Alternatively, step S903 and step S904 may be performed concurrently or may at least be performed substantially at the same time. In general, the connection request message is sent towards the second terminal (step S903) before the session setup message reaches the terminating leg. That is, the connection request message is sent towards the second terminal sufficiently early that it reaches the telecommunications network serving the second terminal before the session setup message.

Whilst the above described method steps have generally been presented in a specific order, the present disclosure encompasses methods where any of the method steps are carried out in a different order and/or in parallel to one or more other steps, so as long as it is technically feasible.

Various examples have been described above which provide a paging margin during which an active connection with a terminating terminal can be established. Providing a paging margin and/or increasing the length of the paging margin, as described herein may provide greater flexibility for various network configurations, which might otherwise have a detrimental effect on the time taken to establish a communication session.

For example, a telecommunications network may operate with a release time which determines a length of time for which an active connection with a terminal is maintained when not in use before the active connection is released. For instance, if a terminal in an RRC and/or EMC Connected state, does not transmit or receive any data packets for a period of time which reaches a preconfigured release time, then the radio and EPS bearers may be released and the terminal may transition to an Idle state. Such a process generally improves the efficiency of radio resource utilisation, since the allocation of radio resources to non-utilised connections is reduced. However, an operator of a telecommunications network might be motivated to configure a connection release time so as to reduce the occurrence of communication session setup delay caused by communication session setup with terminals in an Idle state. For example, the connection release time might be increased in order to reduce the occurrence of session setup messages (e.g. incoming calls) being sent to Idle terminals, which might result in an increased session setup time. However, increasing the connection release time might have a detrimental effect on the efficiency of radio resource utilisation in the telecommunications network.

As was explained above, providing a paging margin and/or increasing a paging margin in a communication session initiation process advantageously reduces or eliminates the contribution of paging and connection establishment to the total session setup time. This might therefore provide a network operator with greater flexibility to reduce a connection release time (so as to improve the efficiency of radio resource utilisation), with little or no detrimental effect on communication session setup times.

Similarly, the provision of a paging margin and/or increasing the length of the paging margin may allow parameters such as the length of a DRX cycle with which a terminal operates when in an Idle state to be increased. For example, an increased paging margin provides a longer window of time during which a terminal can be paged and an active connection with the terminal established, before there is any impact on a communication session setup time. This may allow a DRX cycle with which a terminal operates when in an Idle state to be increased with little or no detrimental effect on a communication session setup time. Enabling the use of a longer DRX cycle may reduce power consumption of a terminal when in an Idle state.

Additionally or alternatively, the provision of a paging margin and/or increasing the length of the paging margin may provide greater flexibility as to settings and/or parameters which can be activated in an IMS network. For example, as will be understood by a skilled person, session establishment in an IMS network may be preceded by implementation of a preconditions procedure during which a preconditions negotiation is performed between the originating and terminating terminals in an effort to ensure that the minimum network resources needed for a successful communication session are available. The preconditions procedure is known to contribute to total communication session setup time and is therefore sometimes omitted from the communication session setup procedure. Providing a paging margin and/or increasing the length of the paging margin, as described herein, may, for example, sufficiently reduce an average session setup time, that greater flexibility is provided for activating the preconditions procedure without leading to unacceptably long session setup times.

Various examples of network modules, devices and terminals have been described above. In general any module, device and/or terminal described herein may be implemented in the form of one or more electronic devices. Figure 10 is a schematic illustration of an example electronic device for use in a network. The general structure of the device depicted in Figure 10 may be applicable to any terminal, base station and/or any other network module (such as a network service module) of the present disclosure.

The device 1000 may include at least one processing unit 1001, memory 1002 and an input/output (I/O) interface 1000. The processing unit 1001 may include any suitable processor and/or combination of processors. For example, the processing unit 1001 may include one or more of a Central Processing Unit (CPU) and a Graphical Processing Unit (GPU). The memory 1002 may include volatile memory and/or non-volatile/persistent memory. The memory 1002 may, for example, be used to store data such as an operating system, software (which may, for example, be executed by the processing unit), configuration information related to the device 1000, session information and/or configuration or registration information associated with any other device, node or module in the network. A device of the type shown in Figure 10 may be operable to run, for example, one or more of an operating system, a user agent and/or a SIP client, etc.

At least the processing unit 1001 is connected to an input/output (I/O) interface 1003. The I/O interface 100 facilitates communication with one or more other devices, network nodes or modules in a network. For example, the I/O interface 1003 may be operable to transmit and/or receive communications to/from other devices in a network. In some examples, the I/O interface 1003 may be operable to transmit and/or receive communications over an air interface. For example, the I/O interface 1003 may include a transmitter and/or a receiver for transmitting and/or receiving wireless communication (e.g. radio frequency signals). In some examples, the I/O interface 1003 may be operable to communicate over one or more wired connections.

In the interest of conciseness not all possible alternatives which fall within the scope of the present disclosure have been explicit discussed herein. As the skilled person will appreciate, in the present disclosure any aspect discussed from the perspective of an element being operable to do an action also discloses the same feature from the perspective of a method including a method step corresponding to the action. Similarly, any discussion presented from the perspective of a method step also discloses the same features from the perspective of any one or more suitable elements being operable or configured to carry out some or all of the method step. It is also considered within the present disclosure that for any method step(s), there can be a computer program configured to carry out, when executed, the method step(s).

Within the context of the present disclosure a device, such as a terminal or a network module or node, is generally considered from a logical perspective, as the element carrying out the appropriate function. Any such device may be implement using one or more physical elements as deemed appropriate. For example, it may be implemented in one (or more) of: a standalone physical device, in two or more separate physical devices, in a distributed system, in a virtual environment using any suitable hardware or hardware combination, etc. For example, in the context of a discussion of two different actions carried out by a network module, it will be appreciated that two different elements may be implementing these respective functions. For example, a first element or node may receive and/or process a session setup message origination from a terminal while a second element or node may generate a connection request message in response to the session setup message received and/or processed at the first element or node. In the context of the present disclosure and from a logical perspective, such first and second element or node can be seen as a single (logical) network module. As mentioned above, the first and second elements or nodes can be seen as logical elements such that they may be implemented as a function of an existing node in the system and the network module can be seen as a (logical) combination of these two functions.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

The invention is not restricted to the details of any foregoing examples.

## Claims

1. A network service system (410a) for a telecommunications network and for initiating a communication session between a first terminal (101a) for a first user and a second terminal (101b) for a second user, the network service system comprising a plurality of network modules associated with the first user, wherein the network service system is configured to:
receive a session setup message originating from the first terminal (101a) and addressed to the second terminal (101b), wherein the session setup message comprises a request to initiate the communication session between the first terminal (101a) and the second terminal (101b); and
route the received session setup message through an originating leg in the network service system (410a) of a routing of the session setup message between the first terminal and the second terminal and send the session setup message to a terminating leg of the routing of the session setup message between the first terminal and the second terminal, wherein the originating leg comprises routing of the session setup session message via a plurality of network modules associated with the first user and the terminating leg comprises routing of the session setup message via a plurality of network modules associated with the second user;
wherein, the originating leg of the routing of the session setup message includes a network service module (420) associated with the first user and configured to generate, in response to receiving the session setup message in the originating leg, a connection request message addressed to the second terminal (101b) and for initiating connection of the second terminal (101b) to a telecommunications network (102b) serving the second terminal; and
wherein the network service system (410a) is further configured to send the connection request message to the terminating leg before sending the session setup message to the terminating leg.

2. The network service system of claim 1, wherein sending the connection request message to the terminating leg comprises:
identifying a terminating network module (113b) associated with the second terminal and in the terminating leg; and
sending the connection request message to the identified terminating network module (113b),
wherein the identified terminating network module (113b) is configured to forward the connection request message towards the telecommunications network (102b) serving the second terminal (101b) before the session setup message reaches the terminating network module.

3. The network service system of claim 2, wherein identifying the terminating network module (113b) in the terminating leg comprises identifying a network module (113b) configured to perform session border control functionality for the second terminal in the terminating leg.

4. The network service system of claim 3, wherein the network service system (410a) is configured to register terminals with the network service system and store registration information of the terminals, wherein the registration information of the terminals includes an indication of a network module configured to perform session border control functionality for each terminal, and
wherein identifying the terminating network module (113b) configured to perform session border control functionality for the second terminal comprises looking up the second terminal's registration with the network service system.

5. The network service system of claim 2, wherein identifying the terminating network module (113b) in the terminating leg comprises identifying a terminating network module configured to act as an initial point of contact for incoming signalling addressed to the second terminal.

6. The network service system of any preceding claim, wherein the network service system (410a) comprises an IP Multimedia Subsystem "IMS" network.

7. The network service system of claim 6, wherein the network service module (420) comprises an application server in the IMS network.

8. The network service system of claim 6 or 7, wherein the session setup message comprises a Session Initiation Protocol, SIP, INVITE message.

9. The network service system of any of claims 6-8, wherein the connection request message comprises a SIP OPTIONS message.

10. A network system for initiating a communication session between a first terminal (101a) for a first user and a second terminal (101b) for a second user in a telecommunications network, the network system comprising:
a network service system (410a) comprising a network service system according to any of claims 1-9; and
a telecommunications network (102b) serving the second terminal (101b) and configured to:
receive the connection request message in the terminating leg; and
in response to receiving the connection request message and if there is no active connection in place between the telecommunications network and the second terminal, transmit a connection signal for triggering the second terminal (101b) to connect to the telecommunications network (102b).

11. The network system of claim 10, wherein the telecommunications network (102b) is further configured to establish an active connection with the second terminal.

12. The network system of claim 11, wherein the telecommunications network (102b) is further configured to receive the session setup message in the terminating leg and send the session setup message to the second terminal (101b) over the established active connection with the second terminal (101b).

13. The network system of any of claims 10-12, wherein the telecommunications network (102b) is configured to transmit the connection signal before receiving the session setup message.

14. The network system of any of claims 10-13, wherein transmitting the connection signal comprises transmitting a paging message to the second terminal (101b).

15. A network service module (420) for implementation in a network service system (410a) for a telecommunications network, the network service system (410a) being for initiating a communication session between a first terminal (101a) for a first user and a second terminal (101b) for a second user, wherein the network service module (420) is associated with the first user and is configured to:
receive a session setup message originating from the first terminal (101a) and addressed to the second terminal (101b), wherein the session setup message comprises a request to initiate the communication session between the first terminal (101a) and the second terminal (101b) and wherein the session setup message is received as part of an originating leg of a routing of the session setup message between the first terminal (101a) and the second terminal (101b), wherein the originating leg comprises routing of the session setup message via a plurality of network modules associated with the first user;
generate, in response to receiving the session setup message in the originating leg, a connection request message addressed to the second terminal (101b) and for initiating connection of the second terminal (101b) to a telecommunications network (102b) serving the second terminal (101b); and
send the connection request message towards the second terminal (101b), wherein the network service module is configured to send the connection request message towards the second terminal (101b) before the session setup message reaches a terminating leg of the routing of the session setup message between the first terminal and the second terminal, wherein the terminating leg comprises routing of the session setup message via a plurality of network modules associated with the second user.

16. The network service module of claim 15, wherein the network service module (410a) is further configured to forward the session setup message to another network module (114a) of the network service system in the originating leg.

17. The network service module of claim 15 or 16, wherein sending the connection request message from the network service module (410a) towards the second terminal (101b) comprises:
identifying a terminating network module (113b) associated with the second terminal and in a terminating leg; and
sending the connection request message to the identified terminating network module (113b).

18. The network service module of claim 17, wherein identifying the terminating network module (113b) in the terminating leg of the session setup message comprises identifying a network module configured to perform session border control functionality in the terminating leg serving the second terminal.

19. The network service module of claim 18, wherein the network service module (410a) is configured to register terminals with the network service system and store registration information of the terminals, wherein the registration information of the terminals includes an indication of a network module configured to perform session border control functionality for each terminal, and
wherein identifying the terminating network module (113b) configured to perform session border control functionality for the second terminal comprises looking up the second terminal's registration with the network service module.

20. The network service module of claim 17, wherein identifying the terminating network module (113b) in the terminating leg of the session setup message comprises identifying a terminating network module configured to act as an initial point of contact for incoming signalling addressed to the second terminal.

21. A method for initiating a communication session between a first terminal (101a) for a first user and a second terminal (101b) for a second user, the method comprising:
receiving, at a network service module (420) in a network service system (410a), a session setup message originating from the first terminal (101a) and addressed to the second terminal (101b), wherein the session setup message comprises a request to initiate the communication session between the first terminal (101a) and the second terminal (101b) and wherein the session setup message is received as part of an originating leg of a routing of the session setup message between the first terminal (101a) and the second terminal (101b) wherein the originating leg comprises routing of the session setup message via a plurality of network modules associated with the first user and wherein the network service module (420) is associated with the first user;
generating, in response to receiving the session setup message in the originating leg, a connection request message for initiating connection of the second terminal (101b) to a telecommunications network (102b) serving the second terminal (101b); and
sending the connection request message towards the second terminal (101b), wherein the network service module is configured to send the connection request message towards the second terminal (101b) before the session setup message reaches a terminating leg of the routing of the session setup message between the first terminal and the second terminal, wherein the terminating leg comprises routing of the session setup message via a plurality of network modules associated with the second user.

22. The method of claim 21, further comprising:
receiving the connection request message at the telecommunications network (102b) serving the second terminal (101b) and if there is no active connection in place between the telecommunications network (102b) and the second terminal (101b), transmitting a connection signal for triggering the second terminal (101b) to connect to the telecommunications network (102b).

23. A computer program comprising instructions which, when executed by a processor, cause the processor to perform a method according to claim 21 or 22.

## Patentansprüche

1. Netzwerkdienstsystem (410a) für ein Telekommunikationsnetzwerk und zur Einleitung einer Kommunikationssitzung zwischen einem ersten Endgerät (101a) für einen ersten Benutzer und einem zweiten Endgerät (101b) für einen zweiten Benutzer, wobei das Netzwerkdienstsystem eine Vielzahl an dem ersten Benutzer zugeordneten Netzwerkmodulen umfasst, wobei das Netzwerkdienstsystem konfiguriert ist zum:
Empfangen einer Sitzungseinrichtungsnachricht, die von dem ersten Endgerät (101a) ausgeht und an das zweite Endgerät (101b) gerichtet ist, wobei die Sitzungseinrichtungsnachricht eine Anforderung zum Einleiten der Kommunikationssitzung zwischen dem ersten Endgerät (101a) und dem zweiten Endgerät (101b) umfasst; und
Weiterleiten der empfangenen Sitzungseinrichtungsnachricht über eine Ausgangsstrecke einer Weiterleitung der Sitzungseinrichtungsnachricht zwischen dem ersten Endgerät und dem zweiten Endgerät in dem Netzwerkdienstsystem (410a) und Senden der Sitzungseinrichtungsnachricht an eine Abschlussstrecke der Weiterleitung der Sitzungseinrichtungsnachricht zwischen dem ersten Endgerät und dem zweiten Endgerät, wobei die Ausgangsstrecke die Weiterleitung der Sitzungseinrichtungsnachricht über eine Vielzahl an dem ersten Benutzer zugeordneten Netzwerkmodulen umfasst und die Abschlussstrecke die Weiterleitung der Sitzungseinrichtungsnachricht über eine Vielzahl an dem zweiten Benutzer zugeordneten Netzwerkmodulen umfasst;
wobei die Ausgangsstrecke der Weiterleitung der Sitzungseinrichtungsnachricht ein Netzwerkdienstmodul (420) beinhaltet, das dem ersten Benutzer zugeordnet und konfiguriert ist, um, infolge des Empfangs der Sitzungseinrichtungsnachricht in der Ausgangs strecke, eine Verbindungsanforderungsnachricht zu erzeugen, die an das zweite Endgerät (101b) gerichtet ist und dem Einleiten der Verbindung des zweiten Endgeräts (101b) mit einem Telekommunikationsnetzwerk (102b) dient, das das zweite Endgerät bedient; und
wobei das Netzwerkdienstsystem (410a) ferner konfiguriert ist, um die Verbindungsanforderungsnachricht an die Abschlussstrecke zu senden, bevor die Sitzungseinrichtungsnachricht an die Abschlussstrecke gesendet wird.

2. Netzwerkdienstsystem nach Anspruch 1, wobei das Senden der Verbindungsanforderungsnachricht an die Abschlussstrecke umfasst:
Identifizieren eines Abschlussnetzwerkmoduls (113b), das dem zweiten Endgerät zugeordnet ist und sich in der Abschlussstrecke befindet; und
Senden der Verbindungsanforderungsnachricht an das identifizierte Abschlussnetzwerkmodul (113b),
wobei das identifizierte Abschlussnetzwerkmodul (113b) konfiguriert ist, um die Verbindungsanforderungsnachricht an das Telekommunikationsnetzwerk (102b) weiterzuleiten, das das zweite Endgerät (101b) bedient, bevor die Sitzungseinrichtungsnachricht das Abschlussnetzwerkmodul erreicht.

3. Netzwerkdienstsystem nach Anspruch 2, wobei das Identifizieren des Abschlussnetzwerkmoduls (113b) in der Abschlussstrecke das Identifizieren eines Netzwerkmoduls (113b) umfasst, das konfiguriert ist, um eine Session-Border-Control-Funktionalität für das zweite Endgerät in der Abschlussstrecke auszuführen.

4. Netzwerkdienstsystem nach Anspruch 3, wobei das Netzwerkdienstsystem (410a) konfiguriert ist, um Endgeräte in dem Netzwerkdienstsystem zu registrieren und Registrierungsinformationen der Endgeräte zu speichern, wobei die Registrierungsinformationen der Endgeräte eine Angabe eines Netzwerkmoduls beinhalten, das konfiguriert ist, um eine Session-Border-Control-Funktionalität für jedes Endgerät auszuführen, und
wobei das Identifizieren des Abschlussnetzwerkmoduls (113b), das zum Ausführen einer Session-Border-Control-Funktionalität für das zweite Endgerät konfiguriert ist, das Suchen der Registrierung des zweiten Endgeräts in dem Netzwerkdienstsystem umfasst.

5. Netzwerkdienstsystem nach Anspruch 2, wobei das Identifizieren des Abschlussnetzwerkmoduls (113b) in der Abschlussstrecke das Identifizieren eines Abschlussnetzwerkmoduls umfasst, das konfiguriert ist, um als erster Kontaktpunkt für eingehende Signale zu dienen, die an das zweite Endgerät gerichtet sind.

6. Netzwerkdienstsystem nach einem vorstehenden Anspruch, wobei das Netzwerkdienstsystem (410a) ein IP-Multimedia-Subsystemnetzwerk (IMS-Netzwerk) umfasst.

7. Netzwerkdienstsystem nach Anspruch 6, wobei das Netzwerkdienstmodul (420) einen Anwendungsserver in dem IMS-Netzwerk umfasst.

8. Netzwerkdienstsystem nach Anspruch 6 oder 7, wobei die Sitzungseinrichtungsnachricht eine SIP (Session Initiation Protocol, Sitzungseinleitungsprotokoll) INVITE-Nachricht umfasst.

9. Netzwerkdienstsystem nach einem der Ansprüche 6 bis 8, wobei die Verbindungsanforderungsnachricht eine SIP OPTIONS-Nachricht umfasst.

10. Netzwerksystem zum Einleiten einer Kommunikationssitzung zwischen einem ersten Endgerät (101a) für einen ersten Benutzer und einem zweiten Endgerät (101b) für einen zweiten Benutzer in einem Telekommunikationsnetzwerk, wobei das Netzwerksystem umfasst:
ein Netzwerkdienstsystem (410a), umfassend ein Netzwerkdienstsystem nach einem der Ansprüche 1 bis 9; und
ein Telekommunikationsnetzwerk (102b), das das zweite Endgerät (101b) bedient und konfiguriert ist zum:
Empfangen der Verbindungsanforderungsnachricht in der Abschlussstrecke; und
infolge des Empfangs der Verbindungsanforderungsnachricht und in dem Fall, dass keine aktive Verbindung zwischen dem Telekommunikationsnetzwerk und dem zweiten Endgerät vorhanden ist, Übertragen eines Verbindungssignals, um auszulösen, dass das zweite Endgerät (101b) eine Verbindung mit dem Telekommunikationsnetzwerk (102b) herstellt.

11. Netzwerksystem nach Anspruch 10, wobei das Telekommunikationsnetzwerk (102b) ferner zum Herstellen einer aktiven Verbindung mit dem zweiten Endgerät konfiguriert ist.

12. Netzwerksystem nach Anspruch 11, wobei das Telekommunikationsnetzwerk (102b) ferner konfiguriert ist, um die Sitzungseinrichtungsnachricht in der Abschlussstrecke zu empfangen und die Sitzungseinrichtungsnachricht über die hergestellte aktive Verbindung mit dem zweiten Endgerät (101b) an das zweite Endgerät (101b) zu senden.

13. Netzwerksystem nach einem der Ansprüche 10 bis 12, wobei das Telekommunikationsnetzwerk (102b) konfiguriert ist, um das Verbindungssignal vor dem Empfang der Sitzungseinrichtungsnachricht zu übertragen.

14. Netzwerksystem nach einem der Ansprüche 10 bis 13, wobei die Übertragung des Verbindungssignals das Übertragen einer Funkrufnachricht an das zweite Endgerät (101b) umfasst.

15. Netzwerkdienstmodul (420) zur Implementierung in einem Netzwerkdienstsystem (410a) für ein Telekommunikationsnetzwerk, wobei das Netzwerkdienstsystem (410a) zur Einleitung einer Kommunikationssitzung zwischen einem ersten Endgerät (101a) für einen ersten Benutzer und einem zweiten Endgerät (101b) für einen zweiten Benutzer dient, wobei das Netzwerkdienstmodul (420) dem ersten Benutzer zugeordnet und konfiguriert ist zum:
Empfangen einer Sitzungseinrichtungsnachricht, die von dem ersten Endgerät (101a) ausgeht und an das zweite Endgerät (101b) gerichtet ist, wobei die Sitzungseinrichtungsnachricht eine Anforderung zum Einleiten der Kommunikationssitzung zwischen dem ersten Endgerät (101a) und dem zweiten Endgerät (101b) umfasst und wobei die Sitzungseinrichtungsnachricht als Teil einer Ausgangsstrecke einer Weiterleitung der Sitzungseinrichtungsnachricht zwischen dem ersten Endgerät (101a) und dem zweiten Endgerät (101b) empfangen wird, wobei die Ausgangsstrecke die Weiterleitung der Sitzungseinrichtungsnachricht über eine Vielzahl an dem ersten Benutzer zugeordneten Netzwerkmodulen umfasst;
Erzeugen, infolge des Empfangs der Sitzungseinrichtungsnachricht in der Ausgangsstrecke, einer Verbindungsanforderungsnachricht, die an das zweite Endgerät (101b) gerichtet ist und dem Einleiten der Verbindung des zweiten Endgeräts (101b) mit einem Telekommunikationsnetzwerk (102b) dient, das das zweite Endgerät (101b) bedient; und
Senden der Verbindungsanforderungsnachricht an das zweite Endgerät (101b), wobei das Netzwerkdienstmodul konfiguriert ist, um die Verbindungsanforderungsnachricht an das zweite Endgerät (101b) zu senden, bevor die Sitzungseinrichtungsnachricht eine Abschlussstrecke der Weiterleitung der Sitzungseinrichtungsnachricht zwischen dem ersten Endgerät und dem zweiten Endgerät erreicht, wobei die Abschlussstrecke die Weiterleitung der Sitzungseinrichtungsnachricht über eine Vielzahl an dem zweiten Benutzer zugeordneten Netzwerkmodulen umfasst.

16. Netzwerkdienstmodul nach Anspruch 15, wobei das Netzwerkdienstmodul (410a) ferner konfiguriert ist, um die Sitzungseinrichtungsnachricht an ein anderes Netzwerkmodul (114a) des Netzwerkdienstsystems in der Ausgangsstrecke weiterzuleiten.

17. Netzwerkdienstmodul nach Anspruch 15 oder 16, wobei das Senden der Verbindungsanforderungsnachricht von dem Netzwerkdienstmodul (410a) an das zweite Endgerät (101b) umfasst:
Identifizieren eines Abschlussnetzwerkmoduls (113b), das dem zweiten Endgerät zugeordnet ist und sich in einer Abschlussstrecke befindet; und
Senden der Verbindungsanforderungsnachricht an das identifizierte Abschlussnetzwerkmodul (113b).

18. Netzwerkdienstmodul nach Anspruch 17, wobei das Identifizieren des Abschlussnetzwerkmoduls (113b) in der Abschlussstrecke der Sitzungseinrichtungsnachricht das Identifizieren eines Netzwerkmoduls umfasst, das konfiguriert ist, um eine Session-Border-Control-Funktionalität in der Abschlussstrecke auszuführen, die das zweite Endgerät bedient.

19. Netzwerkdienstmodul nach Anspruch 18, wobei das Netzwerkdienstmodul (410a) konfiguriert ist, um Endgeräte in dem Netzwerkdienstsystem zu registrieren und Registrierungsinformationen der Endgeräte zu speichern, wobei die Registrierungsinformationen der Endgeräte eine Angabe eines Netzwerkmoduls beinhalten, das konfiguriert ist, um eine Session-Border-Control-Funktionalität für jedes Endgerät auszuführen, und
wobei das Identifizieren des Abschlussnetzwerkmoduls (113b), das zum Ausführen einer Session-Border-Control-Funktionalität für das zweite Endgerät konfiguriert ist, das Suchen der Registrierung des zweiten Endgeräts in dem Netzwerkdienstmodul umfasst.

20. Netzwerkdienstmodul nach Anspruch 17, wobei das Identifizieren des Abschlussnetzwerkmoduls (113b) in der Abschlussstrecke der Sitzungseinrichtungsnachricht das Identifizieren eines Abschlussnetzwerkmoduls umfasst, das konfiguriert ist, um als erster Kontaktpunkt für eingehende Signale zu dienen, die an das zweite Endgerät gerichtet sind.

21. Verfahren zum Einleiten einer Kommunikationssitzung zwischen einem ersten Endgerät (101a) für einen ersten Benutzer und einem zweiten Endgerät (101b) für einen zweiten Benutzer, wobei das Verfahren umfasst:
Empfangen, an einem Netzwerkdienstmodul (420) in einem Netzwerkdienstsystem (410a), einer Sitzungseinrichtungsnachricht, die von dem ersten Endgerät (101a) ausgeht und an das zweite Endgerät (101b) gerichtet ist, wobei die Sitzungseinrichtungsnachricht eine Anforderung zum Einleiten der Kommunikationssitzung zwischen dem ersten Endgerät (101a) und dem zweiten Endgerät (101b) umfasst und wobei die Sitzungseinrichtungsnachricht als Teil einer Ausgangsstrecke einer Weiterleitung der Sitzungseinrichtungsnachricht zwischen dem ersten Endgerät (101a) und dem zweiten Endgerät (101b) empfangen wird, wobei die Ausgangsstrecke die Weiterleitung der Sitzungseinrichtungsnachricht über eine Vielzahl an dem ersten Benutzer zugeordneten Netzwerkmodulen umfasst und wobei das Netzwerkdienstmodul (420) dem ersten Benutzer zugeordnet ist;
Erzeugen, infolge des Empfangs der Sitzungseinrichtungsnachricht in der Ausgangsstrecke, einer Verbindungsanforderungsnachricht zum Einleiten der Verbindung des zweiten Endgeräts (101b) mit einem Telekommunikationsnetzwerk (102b), das das zweite Endgerät (101b) bedient; und
Senden der Verbindungsanforderungsnachricht an das zweite Endgerät (101b), wobei das Netzwerkdienstmodul konfiguriert ist, um die Verbindungsanforderungsnachricht an das zweite Endgerät (101b) zu senden, bevor die Sitzungseinrichtungsnachricht eine Abschlussstrecke der Weiterleitung der Sitzungseinrichtungsnachricht zwischen dem ersten Endgerät und dem zweiten Endgerät erreicht, wobei die Abschlussstrecke die Weiterleitung der Sitzungseinrichtungsnachricht über eine Vielzahl an dem zweiten Benutzer zugeordneten Netzwerkmodulen umfasst.

22. Verfahren nach Anspruch 21, ferner umfassend:
Empfangen der Verbindungsanforderungsnachricht an dem Telekommunikationsnetzwerk (102b), das das zweite Endgerät (101b) bedient, und in dem Fall, dass keine aktive Verbindung zwischen dem Telekommunikationsnetzwerk (102b) und dem zweiten Endgerät (101b) vorhanden ist, Übertragen eines Verbindungssignals, um auszulösen, dass das zweite Endgerät (101b) eine Verbindung mit dem Telekommunikationsnetzwerk (102b) herstellt.

23. Computerprogramm umfassend Anweisungen, die bei Ausführung durch eine Verarbeitungseinheit veranlassen, dass die Verarbeitungseinheit ein Verfahren nach Anspruch 21 oder 22 durchführt.

## Revendications

1. Un système de service de réseau (410a) destiné à un réseau de télécommunications et au lancement d'une session de communication entre un premier terminal (101a) destiné à un premier utilisateur et un deuxième terminal (101b) destiné à un deuxième utilisateur, le système de service de réseau comprenant une pluralité de modules de réseau associés au premier utilisateur, où le système de service de réseau est configuré de façon à :
recevoir un message d'établissement de session provenant du premier terminal (101a) et adressé au deuxième terminal (101b), où le message d'établissement de session contient une demande de lancement de la session de communication entre le premier terminal (101a) et le deuxième terminal (101b), et
acheminer le message d'établissement de session reçu par l'intermédiaire d'un segment d'origine dans le système de service de réseau (410a) d'un trajet d'acheminement du message d'établissement de session entre le premier terminal et le deuxième terminal et envoyer le message d'établissement de session à un segment de terminaison du trajet d'acheminement du message d'établissement de session entre le premier terminal et le deuxième terminal, où le segment d'origine comprend le trajet d'acheminement du message d'établissement de session par l'intermédiaire d'une pluralité de modules de réseau associés au premier utilisateur et le segment de terminaison comprend le trajet d'acheminement du message d'établissement de session par l'intermédiaire d'une pluralité de modules de réseau associés au deuxième utilisateur,
où le segment d'origine du trajet d'acheminement du message d'établissement de session contient un module de service de réseau (420) associé au premier utilisateur et configuré de façon à générer, en réponse à la réception du message d'établissement de session dans le segment d'origine, un message de demande de connexion adressé au deuxième terminal (101b) et destiné au lancement d'une connexion du deuxième terminal (101b) à un réseau de télécommunications (102b) desservant le deuxième terminal, et
où le système de service de réseau (410a) est configuré en outre de façon à envoyer le message de demande de connexion au segment de terminaison avant l'envoi du message d'établissement de session au segment de terminaison.

2. Le système de service de réseau selon la Revendication 1, où l'envoi du message de demande de connexion au segment de terminaison comprend :
l'identification d'un module de réseau de terminaison (113b) associé au deuxième terminal et dans le segment de terminaison, et
l'envoi du message de demande de connexion au module de réseau de terminaison identifié (113b),
où le module de réseau de terminaison identifié (113b) est configuré de façon à transférer le message de demande de connexion vers le réseau de télécommunications (102b) desservant le deuxième terminal (101b) avant que le message d'établissement de session n'atteigne le module de réseau de terminaison.

3. Le système de service de réseau selon la Revendication 2, où l'identification du module de réseau de terminaison (113b) dans le segment de terminaison comprend l'identification d'un module de réseau (113b) configuré de façon à exécuter une fonctionnalité de contrôle de bordure de session pour le deuxième terminal dans le segment de terminaison.

4. Le système de service de réseau selon la Revendication 3, où le système de service de réseau (410a) est configuré de façon à enregistrer des terminaux auprès du système de service de réseau et conserver en mémoire des informations d'enregistrement des terminaux, où les informations d'enregistrement des terminaux comprennent une indication d'un module de réseau configuré de façon à exécuter une fonctionnalité de contrôle de bordure de session pour chaque terminal, et
où l'identification du module de réseau de terminaison (113b) configuré de façon à exécuter une fonctionnalité de contrôle de bordure de session pour le deuxième terminal comprend la consultation de l'enregistrement du deuxième terminal auprès du système de service de réseau.

5. Le système de service de réseau selon la Revendication 2, où l'identification du module de réseau de terminaison (113b) dans le segment de terminaison comprend l'identification d'un module de réseau de terminaison configuré de façon à agir en tant que point de contact initial pour une signalisation entrante adressée au deuxième terminal.

6. Le système de service de réseau selon l'une quelconque des Revendications précédentes, où le système de service de réseau (410a) comprend un réseau de sous-système multimédia IP, "IMS".

7. Le système de service de réseau selon la Revendication 6, où le module de service de réseau (420) comprend un serveur d'applications dans le réseau IMS.

8. Le système de service de réseau selon la Revendication 6 ou 7, où le message d'établissement de session contient un message INVITE de protocole d'ouverture de session, SIP.

9. Le système de service de réseau selon l'une quelconque des Revendications 6 à 8, où le message de demande de connexion contient un message OPTIONS SIP.

10. Un système de réseau destiné au lancement d'une session de communication entre un premier terminal (101a) destiné à un premier utilisateur et un deuxième terminal (101b) destiné à un deuxième utilisateur dans un réseau de télécommunications, le système de réseau comprenant :
un système de service de réseau (410a) comprenant un système de service de réseau selon l'une quelconque des Revendications 1 à 9, et
un réseau de télécommunications (102b) desservant le deuxième terminal (101b) et configuré de façon à :
recevoir le message de demande de connexion dans le segment de terminaison, et
en réponse à la réception du message de demande de connexion et s'il n'existe aucune connexion active en place entre le réseau de télécommunications et le deuxième terminal, transmettre un signal de connexion destiné à amener le deuxième terminal (101b) à se connecter au réseau de télécommunications (102b).

11. Le système de réseau selon la Revendication 10, où le réseau de télécommunications (102b) est configuré en outre de façon à établir une connexion active avec le deuxième terminal.

12. Le système de réseau selon la Revendication 11, où le réseau de télécommunications (102b) est configuré en outre de façon à recevoir le message d'établissement de session dans le segment de terminaison et à envoyer le message d'établissement de session au deuxième terminal (101b) par l'intermédiaire de la connexion active établie avec le deuxième terminal (101b).

13. Le système de réseau selon l'une quelconque des Revendications 10 à 12, où le réseau de télécommunications (102b) est configuré de façon à transmettre le signal de connexion avant la réception du message d'établissement de session.

14. Le système de réseau selon l'une quelconque des Revendications 10 à 13, où la transmission du signal de connexion comprend la transmission d'un message de radiomessagerie au deuxième terminal (101b).

15. Un module de service de réseau (420) destiné à une mise en oeuvre dans un système de service de réseau (410a) pour un réseau de télécommunications, le système de service de réseau (410a) étant destiné au lancement d'une session de communication entre un premier terminal (101a) destiné à un premier utilisateur et un deuxième terminal (101b) destiné à un deuxième utilisateur, où le module de service de réseau (420) est associé au premier utilisateur et est configuré de façon à :
recevoir un message d'établissement de session provenant du premier terminal (101a) et adressé au deuxième terminal (101b), où le message d'établissement de session contient une demande de lancement de la session de communication entre le premier terminal (101a) et le deuxième terminal (101b) et où le message d'établissement de session est reçu en tant que partie d'un segment d'origine d'un trajet d'acheminement du message d'établissement de session entre le premier terminal (101a) et le deuxième terminal (101b), où le segment d'origine comprend le trajet d'acheminement du message d'établissement de session par l'intermédiaire d'une pluralité de modules de réseau associés au premier utilisateur,
générer, en réponse à la réception du message d'établissement de session dans le segment d'origine, un message de demande de connexion adressé au deuxième terminal (101b) et destiné au lancement d'une connexion du deuxième terminal (101b) à un réseau de télécommunications (102b) desservant le deuxième terminal (101b), et
envoyer le message de demande de connexion vers le deuxième terminal (101b), où le module de service de réseau est configuré de façon à envoyer le message de demande de connexion vers le deuxième terminal (101b) avant que le message d'établissement de session n'atteigne un segment de terminaison du trajet d'acheminement du message d'établissement de session entre le premier terminal et le deuxième terminal, où le segment de terminaison comprend le trajet d'acheminement du message d'établissement de session par l'intermédiaire d'une pluralité de modules de réseau associés au deuxième utilisateur.

16. Le module de service de réseau selon la Revendication 15, où le module de service de réseau (410a) est configuré en outre de façon à transférer le message d'établissement de session à un autre module de réseau (114a) du système de service de réseau dans le segment d'origine.

17. Le module de service de réseau selon la Revendication 15 ou 16, où l'envoi du message de demande de connexion à partir du module de service de réseau (410a) vers le deuxième terminal (101b) comprend :
l'identification d'un module de réseau de terminaison (113b) associé au deuxième terminal et dans un segment de terminaison, et
l'envoi du message de demande de connexion au module de réseau de terminaison identifié (113b).

18. Le module de service de réseau selon la Revendication 17, où l'identification du module de réseau de terminaison (113b) dans le segment de terminaison du message d'établissement de session contient l'identification d'un module de réseau configuré de façon à exécuter une fonctionnalité de contrôle de bordure de session dans le segment de terminaison desservant le deuxième terminal.

19. Le module de service de réseau selon la Revendication 18, où le module de service de réseau (410a) est configuré de façon à enregistrer des terminaux auprès du système de service de réseau et conserver en mémoire des informations d'enregistrement des terminaux, où les informations d'enregistrement des terminaux comprennent une indication d'un module de réseau configuré de façon à exécuter une fonctionnalité de contrôle de bordure de session pour chaque terminal, et
où l'identification du module de réseau de terminaison (113b) configuré de façon à exécuter une fonctionnalité de contrôle de bordure de session pour le deuxième terminal comprend la consultation de l'enregistrement du deuxième terminal auprès du module de service de réseau.

20. Le module de service de réseau selon la Revendication 17, où l'identification du module de réseau de terminaison (113b) dans le segment de terminaison du message d'établissement de session contient l'identification d'un module de réseau de terminaison configuré de façon à agir en tant que point de contact initial pour une signalisation entrante adressée au deuxième terminal.

21. Un procédé de lancement d'une session de communication entre un premier terminal (101a) destiné à un premier utilisateur et un deuxième terminal (101b) destiné à un deuxième utilisateur, le procédé comprenant :
la réception, au niveau d'un module de service de réseau (420) dans un système de service de réseau (410a), d'un message d'établissement de session provenant du premier terminal (101a) et adressé au deuxième terminal (101b), où le message d'établissement de session contient une demande de lancement de la session de communication entre le premier terminal (101a) et le deuxième terminal (101b) et où le message d'établissement de session est reçu en tant que partie d'un segment d'origine d'un trajet d'acheminement du message d'établissement de session entre le premier terminal (101a) et le deuxième terminal (101b) où le segment d'origine comprend le trajet d'acheminement du message d'établissement de session par l'intermédiaire d'une pluralité de modules de réseau associés au premier utilisateur et où le module de service de réseau (420) est associé au premier utilisateur,
la génération, en réponse à la réception du message d'établissement de session dans le segment d'origine, d'un message de demande de connexion destiné au lancement d'une connexion du deuxième terminal (101b) à un réseau de télécommunications (102b) desservant le deuxième terminal (101b), et
l'envoi du message de demande de connexion vers le deuxième terminal (101b), où le module de service de réseau est configuré de façon à envoyer le message de demande de connexion vers le deuxième terminal (101b) avant que le message d'établissement de session n'atteigne un segment de terminaison du trajet d'acheminement du message d'établissement de session entre le premier terminal et le deuxième terminal, où le segment de terminaison comprend le trajet d'acheminement du message d'établissement de session par l'intermédiaire d'une pluralité de modules de réseau associés au deuxième utilisateur.

22. Le procédé selon la Revendication 21, comprenant en outre :
la réception du message de demande de connexion au niveau du réseau de télécommunications (102b) desservant le deuxième terminal (101b) et s'il n'existe aucune connexion active en place entre le réseau de télécommunications (102b) et le deuxième terminal (101b), la transmission d'un signal de connexion destiné à amener le deuxième terminal (101b) à se connecter au réseau de télécommunications (102b).

23. Un programme informatique contenant des instructions qui, lorsqu'elles sont exécutées par un processeur, amènent le processeur à exécuter un procédé selon la Revendication 21 ou 22.
